# EUROPEAN PATENT APPLICATION

(11) **EP 4 823 179 A1**
(43) Date of publication of application: **14.10.2026**
(21) Application number: 25741504.2
(22) Date of filing: 15.01.2025
(51) Int. Cl.: H04W 36/00

(54) **METHOD AND DEVICE FOR COMMUNICATION NODE USED FOR WIRELESS COMMUNICATION**

(30) Priority: 15.01.2024 CN 202410059041; 10.05.2024 CN 202410581011
(71) Applicant: Honor Device Co., Ltd., Shenzhen, Guangdong 518040 (CN)
(72) Inventor: YU, Qiaoling, Shenzhen, Guangdong 518040 (CN); XIA, Shushu, Shenzhen, Guangdong 518040 (CN); ZHANG, Xiaobo, Shenzhen, Guangdong 518040 (CN)
(74) Representative: Isarpatent
(86) International application number: PCT/CN2025/072392
(87) International publication number: WO 2025/152943

(57) **Abstract**

This application discloses a method and apparatus in a communication node used for wireless communication. A communication node receives a first RRC message, where the first RRC message includes configuration information of a first candidate cell, and the first candidate cell is configured for a first serving cell; in response to at least the configuration information of the first candidate cell being applied, sets a first information block in a first UE variable. The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

## Description

This application claims priority to Chinese Patent Application No. 202410059041.1, filed with the China National Intellectual Property Administration on January 15, 2024 and entitled "METHOD AND APPARATUS IN COMMUNICATION NODE USED FOR WIRELESS COMMUNICATION", and Chinese Patent Application No. 202410581011.7, filed with the China National Intellectual Property Administration on January 15, 2024 and entitled "METHOD AND APPARATUS IN COMMUNICATION NODE USED FOR WIRELESS COMMUNICATION", which are incorporated herein by reference in their entireties.

### TECHNICAL FIELD

This application relates to a transmission method and apparatus in a wireless communication system, and in particular, to a method and apparatus for setting storage content of mobility information.

### BACKGROUND

A self-organising network (Self-Organising Networks, SON) includes network self-configuration and self-optimization; and can configure a terminal to measure and collect a key indicator, adaptively adjust a parameter, and provide reliable support for optimizing mobility performance. An existing 3GPP protocol supports a user equipment (User Equipmentm UE) in storing and collecting related information, and also completing information reporting of availability and indication information of the stored and collected related information, to facilitate base station scheduling of the related information.

With continuous development of wireless communication, demands for mobility (Mobility) in terms of a delay, robustness, and the like become increasingly high. In the Release-16, 3GPP (the 3rd Generation Partnership Project, the 3rd Generation Partnership Project) introduced conditional handover (Conditional Handover, CHO) and CPC (Conditional PSCell (Primary SCG (Secondary Cell Group) Cell) Change), allowing a UE to perform mobility based on a pre-configured execution condition, so as to shorten handover interruption time. In the Release-18, 3GPP launched the "Further NR (New Radio, new radio) Mobility Enhancements (Further NR mobility enhancements)" work item (Work Itemm WI) and completed standardization of L1 (Layer 1, layer 1)/L2 (Layer 2, layer 2) triggered mobility (L1/L2 Triggered Mobility, LTM) and subsequent (subsequent) CPC. The subsequent CPC will also be an important research direction for the SON/MDT Enhancements WI in Release-19. The standardization of subsequent CPC also makes subsequent CHO and subsequent LTM a potential direction for standardization.

### SUMMARY

In conventional solutions, content of SuccessHO-Report, SuccessPSCell-Report, or RLF-report stored and/or reported by a UE only includes information about a source cell and a target/candidate cell, and settings for content of SuccessHO-Report, SuccessPSCell-Report, or RLF-report stored and/or reported by the UE are designed for a singular mobility scenario. Through research, the inventors found that existing content settings for storing various reports are not conducive to network optimization for subsequent CPC, subsequent CHO, or subsequent LTM. Therefore, it is necessary to research settings for storage content in reports for the subsequent CPC, the subsequent CHO, or the subsequent LTM.

In view of the foregoing problem, this application provides a solution for setting storage content of mobility information. In the foregoing problem descriptions, an NR system is used as an example. This application is also applicable to scenarios such as an LTE (Long-Term Evolution, long term evolution) system or an LTE-A (Long-Term Evolution Advancedm, long term evolution advanced) system or a future 6G system, to achieve similar technical effects to the NR system. Moreover, although this application mainly provides specific implementations for a trigger condition for reporting storage information related to an RRC_CONNECTED state, this application can also be used in scenarios such as an RRC_IDLE state or an RRC_INACTIVE state, to achieve similar technical effects to the RRC connected state for setting storage content of subsequent information. Further, a unified design scheme used for different scenarios also helps reduce hardware complexity and costs. Further, although this application provides specific implementations for CPA/C, LTM, C-LTM, and CHO scenarios, this application can also be used in scenarios such as m-TRP m-TA, to achieve technical effects similar to those in the CPA/C, LTM, C-LTM, and CHO scenarios. Further, although an original intention of this application is for a Uu air interface, this application can also be used for a PC5 interface, to achieve similar technical effects to the Uu air interface. Further, although the original intention of this application is for a terminal-to-base station scenario, this application is also applicable to a V2X (Vehicle-to-Everything, vehicle-to-everything) scenario, and communication scenarios between a terminal and a relay, and between a relay and a base station, to achieve similar technical effects to the terminal-to-base station scenario. Further, although the original intention of this application is for the terminal-to-base station scenario, this application is also applicable to an IAB (Integrated Access and Backhaul, integrated access and backhaul) communication scenario, to achieve similar technical effects to the terminal-to-base station scenario. Further, although the original intention of this application is for a terrestrial network (Terrestrial Network, TN) scenario, this application is also applicable to a non-terrestrial network (Non-Terrestrial Network, NTN) communication scenario, to achieve similar technical effects to the TN scenario. Further, although the original intention of this application is for a conventional communication waveform transmission scenario, this application is also applicable to a transmission scenario combining communication and sensing waveforms, to achieve similar technical effects to those in the conventional communication waveform transmission scenario. In addition, using a unified solution for different scenarios also helps reduce hardware complexity and costs.

In an embodiment, interpretation of terminology (Terminology) in this application refers to the definitions in the 3GPP specification protocol TS36 series.

In an embodiment, the interpretation of the terminology in this application refers to the definitions in the 3GPP specification protocol TS37 series.

In an embodiment, the interpretation of the terminology in this application refers to the definitions in the 3GPP specification protocol TS38 series.

It should be noted that, in a case of no conflict, embodiments and features in the embodiments of any node in this application can be applied to any other node. In a case of no conflict, embodiments and features in the embodiments in this application may be arbitrarily combined with each other.

This application discloses a method in a first node used for wireless communication, including:
receiving a first RRC message, where the first RRC message includes configuration information of a first candidate cell, and the first candidate cell is configured for a first serving cell; and in response to at least the configuration information of the first candidate cell being applied, setting a first information block in a first UE variable.

The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, a problem to be resolved by this application includes: when to start storing subsequent candidate cell information.

In an embodiment, a characteristic of the method includes: in response to at least the configuration information of the first candidate cell being applied, setting the first information block in the first UE variable.

In an embodiment, a problem to be resolved by this application includes: how to determine whether the subsequent candidate cell information should be stored.

In an embodiment, a characteristic of the method includes: The configuration information of the first candidate cell includes the second information block, the second information block includes the configuration information of the second candidate cell, and the second candidate cell is configured for the first candidate cell.

In an embodiment, a problem to be resolved by this application includes: how to set content for storing the subsequent candidate cell information.

In an embodiment, a characteristic of the method includes: The first information block includes at least the identifier of the first serving cell, the identifier of the first candidate cell, and the identifier of the second candidate cell.

In an embodiment, a benefit of the method includes: reducing existing protocol modifications.

In an embodiment, a benefit of the method includes: beneficial for a UE side to store more information.

In an embodiment, a benefit of the method includes: reducing control signaling interaction.

In an embodiment, a benefit of the method includes: facilitating subsequent protocol modifications.

In an embodiment, a benefit of the method includes: beneficial for improving autonomy of a UE.

According to one aspect of this application, the first information block includes first measurement information, the first measurement information depends on measurement performed on at least the second candidate cell based on the second information block, and the second candidate cell is a subsequent candidate cell.

In an embodiment, a problem to be resolved by this application includes: how to determine content in the first information block.

In an embodiment, a characteristic of the method includes: The first information block includes the first measurement information, and the first measurement information depends on the measurement performed on at least the second candidate cell based on the second information block, and the second candidate cell is the subsequent candidate cell.

In an embodiment, a benefit of the method includes: beneficial for optimization of measurement configuration.

In an embodiment, a benefit of the method includes: beneficial for optimization of subsequent candidate cell configuration.

According to one aspect of this application, the first information block includes a first field, and the first field indicates whether the configuration information of the second candidate cell is applied.

In an embodiment, a problem to be resolved by this application includes: how to determine whether the configuration information of the second candidate cell is applied.

In an embodiment, a characteristic of the method includes: The first information block includes the first field, and the first field indicates whether the configuration information of the second candidate cell is applied.

In an embodiment, a benefit of the method includes: beneficial for a base station to clearly understand an application status of the configured subsequent candidate cell.

In an embodiment, a benefit of the method includes: beneficial for a base station side to perform optimization and adjustment.

In an embodiment, a benefit of the method includes: beneficial for improving robustness of network self-optimization.

According to one aspect of this application, the first information block includes a second field, and the second field indicates a reason why the configuration information of the second candidate cell is not applied; and the configuration information of the second candidate cell is not applied.

In an embodiment, a problem to be resolved by this application includes: how to indicate information related to the configuration information of the second candidate cell not being applied.

In an embodiment, a characteristic of the method includes: The first information block includes the second field, and the second field indicates the reason why the configuration information of the second candidate cell is not applied; and the configuration information of the second candidate cell is not applied.

In an embodiment, a benefit of the method includes: beneficial for configuration optimization of the subsequent candidate cell for a next time.

In an embodiment, a benefit of the method includes: beneficial for avoiding a waste of a configuration resource.

According to one aspect of this application, the first information block includes at least one of a first time interval or a second time interval; the first time interval depends on a release of the configuration information of the second candidate cell; and the second time interval depends on application of the configuration information of the second candidate cell.

In an embodiment, a problem to be resolved by this application includes: specific time information stored in the first information block.

In an embodiment, a characteristic of the method includes: The first information block includes at least one of the first time interval or the second time interval.

In an embodiment, a benefit of the method includes: beneficial for collection of time data.

In an embodiment, a benefit of the method includes: beneficial for collaborative optimization and adjustment of the UE side.

In an embodiment, a benefit of the method includes: facilitating indicating.

In an embodiment, a problem to be resolved by this application includes: how to determine the first time interval.

In an embodiment, a characteristic of the method includes: The first time interval depends on the release of the configuration information of the second candidate cell.

In an embodiment, a benefit of the method includes: beneficial for the base station side to clearly know time when the configuration information of the second candidate cell is released.

In an embodiment, a problem to be resolved by this application includes: how to determine the second time interval.

In an embodiment, a characteristic of the method includes: The second time interval depends on the application of the configuration information of the second candidate cell.

In an embodiment, a benefit of the method includes: beneficial for the base station side to understand interval time for subsequent candidate configuration execution.

According to one aspect of this application, the first information block includes a third information block, and the third information block indicates whether the configuration information of the second candidate cell is fully applied; and after the configuration information of the first candidate cell is fully applied, the configuration information of the second candidate cell is applied.

In an embodiment, a problem to be resolved by this application includes: how to indicate whether the configuration information of the second candidate cell is fully applied.

In an embodiment, a characteristic of the method includes: The first information block includes the third information block, and the third information block indicates whether the configuration information of the second candidate cell is fully applied.

In an embodiment, a problem to be resolved by this application includes: when to determine that the configuration information of the second candidate cell is applied.

In an embodiment, a characteristic of the method includes: After the configuration information of the first candidate cell is applied, the configuration information of the second candidate cell is applied.

In an embodiment, a benefit of the method includes: limiting the application of the configuration information of the second candidate cell.

In an embodiment, a benefit of the method includes: reducing a waste of an unnecessary measurement resource.

According to one aspect of this application, it is characterized by including:
in response to the configuration information of the second candidate cell not being fully applied, setting a fourth information block in a second UE variable, where the fourth information block indicates that the configuration information of the second candidate cell is not fully applied.

The second UE variable is different from the first UE variable.

In an embodiment, a problem to be resolved by this application includes: how to indicate that the configuration information of the second candidate cell is not fully applied.

In an embodiment, a problem to be resolved by this application includes: how to store information that the configuration information of the second candidate cell is not fully applied.

In an embodiment, a characteristic of the method includes: In response to the configuration information of the second candidate cell not being fully applied, the fourth information block is set in the second UE variable, and the fourth information block indicates that the configuration information of the second candidate cell is not fully applied.

In an embodiment, a characteristic of the method includes: The second UE variable is different from the first UE variable.

In an embodiment, a benefit of the method includes: easy to implement a protocol.

In an embodiment, a benefit of the method includes: avoiding cross-storage of variables for different purposes.

According to one aspect of this application, it is characterized by including:
receiving a second RRC message, where the second RRC message includes a first request indication; and in response to the second RRC message being received, sending a third RRC message.

The third RRC message includes the first information block in the first UE variable; and the third RRC message includes that the first information block in the first UE variable depends on the first request indication.

This application discloses a method in a second node used for wireless communication, including:
sending a first RRC message, where the first RRC message includes configuration information of a first candidate cell, and the first candidate cell is configured for a first serving cell.

In response to at least the configuration information of the first candidate cell being applied, a recipient of the first RRC message sets a first information block in a first UE variable; the configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

According to one aspect of this application, the first information block includes first measurement information, the first measurement information depends on measurement performed by the recipient of the first RRC message on at least the second candidate cell based on the second information block, and the second candidate cell is a subsequent candidate cell.

According to one aspect of this application, the first information block includes a first field, and the first field indicates whether the configuration information of the second candidate cell is applied.

According to one aspect of this application, the first information block includes a second field, and the second field indicates a reason why the configuration information of the second candidate cell is not applied; and the configuration information of the second candidate cell is not applied.

According to one aspect of this application, the first information block includes at least one of a first time interval or a second time interval; the first time interval depends on a release of the configuration information of the second candidate cell; and the second time interval depends on application of the configuration information of the second candidate cell.

According to one aspect of this application, the first information block includes a third information block, and the third information block indicates whether the configuration information of the second candidate cell is fully applied; and after the configuration information of the first candidate cell is fully applied, the configuration information of the second candidate cell is applied.

According to one aspect of this application, it is characterized by including:

In response to the configuration information of the second candidate cell not being fully applied, the recipient of the first RRC message sets a fourth information block in a second UE variable, where the fourth information block indicates that the configuration information of the second candidate cell is not fully applied.

The second UE variable is different from the first UE variable.

According to one aspect of this application, it is characterized by including:
sending a second RRC message, where the second RRC message includes a first request indication; and in response to the second RRC message being sent, receiving a third RRC message.

The third RRC message includes the first information block in the first UE variable; and the third RRC message includes that the first information block in the first UE variable depends on the first request indication.

This application discloses a first node used for wireless communication, including:
a first processing machine, configured to: receive a first RRC message, where the first RRC message includes configuration information of a first candidate cell, and the first candidate cell is configured for a first serving cell; and in response to at least the configuration information of the first candidate cell being applied, set a first information block in a first UE variable.

The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

This application discloses a second node used for wireless communication, including:
a second processing machine, configured to: send a first RRC message, where the first RRC message includes configuration information of a first candidate cell, and the first candidate cell is configured for a first serving cell.

In response to at least the configuration information of the first candidate cell being applied, a recipient of the first RRC message sets a first information block in a first UE variable; the configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, compared with a conventional solution, this application has the following advantages.
-. This is beneficial for self-configuration and self-optimization for mobility.
-. This is beneficial for reducing a handover delay caused by high-layer configuration.
-. This is beneficial for improving robustness of a cell handover.
-. This is beneficial for saving a signaling resource.
-. This is beneficial for the base station to obtain more information.
-. This is beneficial for data collection.
-. This is beneficial for optimization and execution of subsequent configuration.

### BRIEF DESCRIPTION OF DRAWINGS

Other features, objectives, and advantages of this application become more apparent by reading detailed descriptions of non-limiting embodiments with reference to the following drawings:
FIG. 1 is a flowchart of communication of a first node according to an embodiment of this application;
FIG. 2 is a schematic diagram of a network architecture according to an embodiment of this application;
FIG. 3 is a schematic diagram of an embodiment of radio protocol architectures for a user plane and a control plane according to an embodiment of this application;
FIG. 4 is a schematic diagram of a first communication device and a second communication device according to an embodiment of this application;
FIG. 5 is a flowchart of transmission of a wireless signal according to an embodiment of this application;
FIG. 6 is a schematic diagram of a first information block including first measurement information according to an embodiment of this application;
FIG. 7 is a schematic diagram of a first information block including a first field according to an embodiment of this application;
FIG. 8 is a schematic diagram of a first information block including a second field according to an embodiment of this application;
FIG. 9 is a schematic diagram of a first information block including at least one of a first time interval or a second time interval according to an embodiment of this application;
FIG. 10 is a schematic diagram of a first information block including a third information block according to an embodiment of this application;
FIG. 11 is a flowchart of setting a fourth information block in a second UE variable according to an embodiment of this application;
FIG. 12 is a schematic diagram of a fourth RRC message not indicating that a first UE variable has available information according to an embodiment of this application;
FIG. 13 is a block diagram of a structure of a processing apparatus used for a first node according to an embodiment of this application; and
FIG. 14 is a block diagram of a structure of a processing apparatus used for a second node according to an embodiment of this application.

### DESCRIPTION OF EMBODIMENTS

The technical solutions of this application are further described in detail below with reference to the accompanying drawings. It should be noted that, in a case of no conflict, embodiments in this application and features in embodiments can be arbitrarily combined with each other.

### Embodiment 1

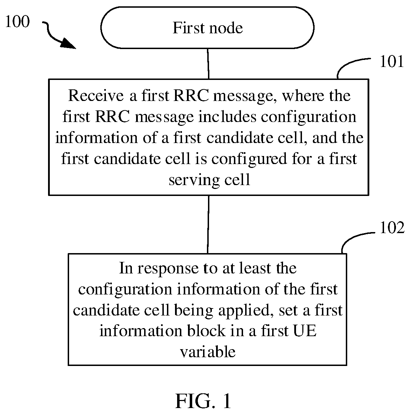

Embodiment 1 illustrates a flowchart of communication of a first node according to an embodiment of this application, as shown in FIG. 1. In FIG. 1, each box represents a step, and it should be particularly emphasized that an order of the boxes in the figure does not represent a temporal precedence relation between the represented steps.

In Embodiment 1, the first node in this application, in step 101, receives a first RRC message, where the first RRC message includes configuration information of a first candidate cell, and the first candidate cell is configured for a first serving cell; in step 102, in response to at least the configuration information of the first candidate cell being applied, sets a first information block in a first UE variable. The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, the first RRC message is UE-specific (UE-Specifc).

In an embodiment, the first RRC message is a cell common (Cell Common) RRC message.

In an embodiment, the first RRC message is transmitted through a DCCH (Dedicated Control Channel, dedicated control channel).

In an embodiment, the first RRC message is transmitted through an SCCH (Sidelink Control Channel, sidelink control channel).

In an embodiment, the first RRC message is transmitted through a BCCH (Broadcast Control Channel, broadcast control channel).

In an embodiment, the first RRC message is transmitted through an SRB0 (Signalling Radio Bearer 0, signalling radio bearer 0).

In an embodiment, the first RRC message is transmitted through an SRB1 (Signalling Radio Bearer 1, signalling radio bearer 1).

In an embodiment, the first RRC message is transmitted through an SRB3 (Signalling Radio Bearer 3, signalling radio bearer 3).

In an embodiment, the first RRC message is transmitted through a PDSCH (Physical Downlink shared channel, physical downlink shared channel).

In an embodiment, the first RRC message includes an RRCReconfiguration message.

In an embodiment, the first RRC message includes an RRCResume message.

In an embodiment, the first RRC message includes an RRCSetup message.

In an embodiment, the first RRC message includes an RRCReconfiguration-v1610-IEs.

In an embodiment, the first RRC message is an RRCReconfiguration message.

In an embodiment, the first RRC message is an RRCResume message.

In an embodiment, the first RRC message is an RRCSetup message.

In an embodiment, the first RRC message is an RRCReconfiguration-v1610-IEs.

In an embodiment, that the first RRC message includes the configuration information of the first candidate cell means: The first RRC message includes a configuration information list of a plurality of candidate cells, and the first candidate cell is at least one of the plurality of candidate cells.

In an embodiment, that the first RRC message includes the configuration information of the first candidate cell means: The first RRC message includes partial configuration information of the first candidate cell, and the partial configuration information is delta configuration information.

In an embodiment, that the first RRC message includes the configuration information of the first candidate cell means: The first RRC message includes partial configuration information of the first candidate cell, and the partial configuration information is reference configuration information.

In an embodiment, that the first RRC message includes the configuration information of the first candidate cell means: The first RRC message includes a configuration field, and the configuration field includes the configuration information of the first candidate cell.

In an embodiment, a name of the configuration field includes conditional.

In an embodiment, the name of the configuration field includes LTM.

In an embodiment, the configuration field is conditionalReconfiguration.

In an embodiment, the configuration field is ltm-config.

In an embodiment, that the first RRC message includes the configuration information of the first candidate cell means: The first RRC message activates the configuration information of the first candidate cell stored in the first node.

In an embodiment, that the first RRC message includes the configuration information of the first candidate cell means: The first RRC message includes a configuration information identifier, and the configuration information identifier matches a configuration information identifier of the first candidate cell stored in the first node.

In an embodiment, the first candidate cell is a PCell.

In an embodiment, the first candidate cell is a PSCell.

In an embodiment, the first candidate cell is an SpCell.

In an embodiment, the first candidate cell is a candidate PCell.

In an embodiment, the first candidate cell is a candidate PSCell.

In an embodiment, the first candidate cell is a candidate SpCell.

In an embodiment, the first candidate cell is a target candidate cell.

In an embodiment, the configuration information of the first candidate cell is for CHO.

In an embodiment, the configuration information of the first candidate cell is for CPA/C.

In an embodiment, the configuration information of the first candidate cell includes ConditionalReconfiguration IE.

In an embodiment, the configuration information of the first candidate cell is ConditionalReconfiguration IE.

In an embodiment, the configuration information of the first candidate cell includes CondReconfigToAddMod-r16.

In an embodiment, the configuration information of the first candidate cell includes condRRCReconfig.

In an embodiment, the configuration information of the first candidate cell includes an execution condition for the configuration information of the first candidate cell.

In an embodiment, the execution condition for the configuration information of the first candidate cell includes condExecutionCond-r16.

In an embodiment, the execution condition for the configuration information of the first candidate cell includes condExecutionCondSCG-r17.

In an embodiment, the execution condition for the configuration information of the first candidate cell includes condExecutionCondPSCell-r18.

In an embodiment, the execution condition for the configuration information of the first candidate cell includes MeasId.

In an embodiment, the configuration information of the first candidate cell is for LTM.

In an embodiment, the configuration information of the first candidate cell includes LTM-Config IE.

In an embodiment, the configuration information of the first candidate cell is LTM-Config IE.

In an embodiment, the configuration information of the first candidate cell includes LTM-Candidate IE.

In an embodiment, the configuration information of the first candidate cell includes a timer T304.

In an embodiment, the configuration information of the first candidate cell includes a timer T310.

In an embodiment, the configuration information of the first candidate cell includes a timer T312.

In an embodiment, the configuration information of the first candidate cell includes a timer other than the timers T304, T310, and T312.

In an embodiment, the first serving cell is a cell currently being served.

In an embodiment, the first serving cell is a cell that has been served.

In an embodiment, the first serving cell is a currently camped cell.

In an embodiment, the first serving cell is a currently connected cell.

In an embodiment, the first serving cell is a PCell.

In an embodiment, the first serving cell is a PSCell.

In an embodiment, that the first candidate cell is configured for the first serving cell means: The first serving cell is a PCell, the first candidate cell is a PCell, and the first candidate cell is configured for the first serving cell for CHO.

In an embodiment, that the first candidate cell is configured for the first serving cell means: The first serving cell is a PCell, the first candidate cell is a PCell, and the first candidate cell is configured for the first serving cell for LTM.

In an embodiment, that the first candidate cell is configured for the first serving cell means: The first serving cell is a PCell, the first candidate cell is a PSCell, and the first candidate cell is configured for the first serving cell for CPA.

In an embodiment, that the first candidate cell is configured for the first serving cell means: The first serving cell is a PCell, the first candidate cell is a PSCell, and the first candidate cell is configured for the first serving cell for CPC.

In an embodiment, that the first candidate cell is configured for the first serving cell means: The first serving cell is a PSCell, the first candidate cell is a PSCell, and the first candidate cell is configured for the first serving cell for CPC.

In an embodiment, in response to at least the configuration information of the first candidate cell being applied means: in response to at least the configuration information of the first candidate cell being fully applied, where the configuration information of the first candidate cell is fully applied.

In a sub-embodiment of the foregoing embodiment, that at least the configuration information of the first candidate cell is fully applied means: The configuration information of the first candidate cell is fully applied.

In a sub-embodiment of the foregoing embodiment, that at least the configuration information of the first candidate cell is fully applied means: The configuration information of the first candidate cell is fully applied and a first condition set is satisfied.

In a sub-embodiment of the foregoing embodiment, the first condition set includes at least a first condition, the first condition includes that an elapsed time value of a first timer and a configuration value of the first timer satisfy a first threshold, and the configuration information of the first candidate cell includes the first timer.

In an attached embodiment of the foregoing sub-embodiment, the first timer is T304.

In an attached embodiment of the foregoing sub-embodiment, the first timer is T310.

In an attached embodiment of the foregoing sub-embodiment, the first timer is T312.

In an attached embodiment of the foregoing sub-embodiment, the first timer is a timer other than T304, T310, and T312.

In an attached embodiment of the foregoing sub-embodiment, the first threshold is pre-configured.

In an attached embodiment of the foregoing sub-embodiment, the first threshold is configured in an RRC message.

In an attached embodiment of the foregoing sub-embodiment, the first threshold is configured in MobilityFromNRCommand.

In an attached embodiment of the foregoing sub-embodiment, the first threshold is configured in OtherConfig IE.

In an attached embodiment of the foregoing sub-embodiment, the first threshold is thresholdPercentageT304-SCG-r18.

In an attached embodiment of the foregoing sub-embodiment, the first threshold is thresholdPercentageT304-r17.

In an attached embodiment of the foregoing sub-embodiment, the first threshold is thresholdPercentageT310-SCG-r18.

In an attached embodiment of the foregoing sub-embodiment, the first threshold is thresholdPercentageT310-r17.

In an attached embodiment of the foregoing sub-embodiment, the first threshold is thresholdPercentageT312-SCG-r18.

In an attached embodiment of the foregoing sub-embodiment, the first threshold is thresholdPercentageT312-r17.

In a sub-embodiment of the foregoing embodiment, the first condition set includes at least a second condition, the second condition includes that the configuration information of the first candidate cell includes the second information block, and the second information block includes the configuration information of the second candidate cell.

In a sub-embodiment of the foregoing embodiment, the second condition includes that the first RRC message indicates reporting for a subsequent candidate cell; and the second candidate cell is a subsequent candidate cell.

In a sub-embodiment of the foregoing embodiment, the second condition includes that the configuration information of the first candidate cell includes the second information block, the second information block includes the configuration information of the second candidate cell, and the first RRC message indicates reporting for a subsequent candidate cell; and the second candidate cell is a subsequent candidate cell.

In a sub-embodiment of the foregoing embodiment, the second condition includes that the first node supports reporting for a subsequent candidate cell, and the second candidate cell is a subsequent candidate cell.

In a sub-embodiment of the foregoing embodiment, the second condition includes that the configuration information of the first candidate cell includes the second information block, the second information block includes the configuration information of the second candidate cell, and the first node supports reporting for a subsequent candidate cell; and the second candidate cell is a subsequent candidate cell.

In a sub-embodiment of the foregoing embodiment, the second condition includes that the first RRC message indicates reporting for a subsequent candidate cell and the first node supports the reporting for the subsequent candidate cell; and the second candidate cell is a subsequent candidate cell.

In a sub-embodiment of the foregoing embodiment, the second condition includes that the configuration information of the first candidate cell includes the second information block, the second information block includes the configuration information of the second candidate cell, and the first RRC message indicates reporting for a subsequent candidate cell and the first node supports the reporting for the subsequent candidate cell; and the second candidate cell is a subsequent candidate cell.

In a sub-embodiment of the foregoing embodiment, the first condition set includes at least the first condition and the second condition.

In a sub-embodiment of the foregoing embodiment, that the configuration information of the first candidate cell is fully applied means: Random access is initiated to the first candidate cell by using the configuration information of the first candidate cell.

In a sub-embodiment of the foregoing embodiment, that the configuration information of the first candidate cell is fully applied means: successfully accessing the first candidate cell.

In a sub-embodiment of the foregoing embodiment, that the configuration information of the first candidate cell is fully applied means: successfully handing over to the first candidate cell.

In an embodiment, in response to at least the configuration information of the first candidate cell being applied means: in response to at least the configuration information of the first candidate cell not being fully applied, where the configuration information of the first candidate cell is not fully applied.

In a sub-embodiment of the foregoing embodiment, that at least the configuration information of the first candidate cell is not fully applied means: The configuration information of the first candidate cell is not fully applied.

In a sub-embodiment of the foregoing embodiment, that at least the configuration information of the first candidate cell is not fully applied means: The configuration information of the first candidate cell is not fully applied and a second condition set is satisfied.

In a sub-embodiment of the foregoing embodiment, the second condition set includes at least a third condition, and the third condition includes expiration of a second timer.

In a sub-embodiment of the foregoing embodiment, the second timer is the timer T304.

In a sub-embodiment of the foregoing embodiment, the second timer is the timer T310.

In a sub-embodiment of the foregoing embodiment, the second timer is the timer T312.

In a sub-embodiment of the foregoing embodiment, the third condition includes an HOF occurring on the first candidate cell.

In a sub-embodiment of the foregoing embodiment, the third condition includes an RLF occurring on the first serving cell.

In a sub-embodiment of the foregoing embodiment, the second condition set includes at least the second condition.

In a sub-embodiment of the foregoing embodiment, the second condition set includes at least the third condition and the second condition.

In a sub-embodiment of the foregoing embodiment, that the configuration information of the first candidate cell is not fully applied means: A random access process initiated to the first candidate cell by using the configuration information of the first candidate cell is not completed.

In a sub-embodiment of the foregoing embodiment, that the configuration information of the first candidate cell is not fully applied means not successfully accessing the first candidate cell.

In a sub-embodiment of the foregoing embodiment, that the configuration information of the first candidate cell is not fully applied means: not successfully handing over to the first candidate cell.

In a sub-embodiment of the foregoing embodiment, that the configuration information of the first candidate cell is not fully applied means: The T304 expires, and the T304 is started when the configuration information of the first candidate cell starts to be applied.

In a sub-embodiment of the foregoing embodiment, that the configuration information of the first candidate cell is not fully applied means: The random access process fails, and the random access process is performed during a process of applying the configuration information of the first candidate cell.

In a sub-embodiment of the foregoing embodiment, that the configuration information of the first candidate cell is not fully applied means: not receiving, on the first candidate cell, a C-RNTI scrambled PDCCH that indicates new transmission.

In an embodiment, in response to at least the configuration information of the first candidate cell being applied means: in response to the configuration information of the first candidate cell being applied and the configuration information of the second candidate cell being applied.

In an embodiment, in response to at least the configuration information of the first candidate cell being applied, all of the first information block is set in the first UE variable.

In an embodiment, in response to at least the configuration information of the first candidate cell being applied, at least part of the first information block is set in the first UE variable.

In an embodiment, in response to at least the configuration information of the second candidate cell being applied, all of the first information block is set in the first UE variable.

In an embodiment, in response to at least the configuration information of the second candidate cell being applied, at least part of the first information block is set in the first UE variable.

In an embodiment, in response to at least the configuration information of the second candidate cell being applied, when the at least part of the first information block is set in the first UE variable, the first UE variable is not cleared.

In an embodiment, that the configuration information of the first candidate cell is applied means: performing measurement on the first candidate cell.

In an embodiment, that the configuration information of the first candidate cell is applied means: evaluating the execution condition for the configuration information of the first candidate cell.

In an embodiment, that the configuration information of the first candidate cell is applied means: selecting the first candidate cell as a target cell for a handover.

In an embodiment, that the configuration information of the first candidate cell is applied means: performing random access on the first candidate cell.

In an embodiment, that the configuration information of the second candidate cell is applied means: performing measurement on the second candidate cell.

In an embodiment, that the configuration information of the second candidate cell is applied means: evaluating an execution condition for the configuration information of the second candidate cell.

In an embodiment, that the configuration information of the second candidate cell is applied means: selecting the second candidate cell as a target cell for a handover.

In an embodiment, that the configuration information of the second candidate cell is applied means: performing random access on the second candidate cell.

In an embodiment, the first UE variable is VarSuccessHO-Report, and the first serving cell is a PCell.

In a sub-embodiment of the foregoing embodiment, the first information block is SuccessHO-Report-r17.

In a sub-embodiment of the foregoing embodiment, the first information block is SuccessHO-Report-r19.

In a sub-embodiment of the foregoing embodiment, the first information block is SuccessHO-Report-r20.

In an embodiment, the first UE variable is VarSuccessPSCell-Report, and the first serving cell is a PSCell.

In a sub-embodiment of the foregoing embodiment, the first information block is SuccessPSCell-Report-r18.

In a sub-embodiment of the foregoing embodiment, the first information block is SuccessPSCell-Report-r19.

In a sub-embodiment of the foregoing embodiment, the first information block is SuccessPSCell-Report-r20.

In an embodiment, a name of the first UE variable includes at least one of VarSuccess, LTM, L1, L2, mobility, and Report.

In a sub-embodiment of the foregoing embodiment, the first serving cell is a PCell.

In a sub-embodiment of the foregoing embodiment, the first serving cell is a PSCell.

In a sub-embodiment of the foregoing embodiment, the first information block is SuccessLTM-Report-r19.

In a sub-embodiment of the foregoing embodiment, the first information block is SuccessLTM-Report-r20.

In an embodiment, the first information block includes information related to the configuration information of the first candidate cell being fully applied.

In an embodiment, the first information block includes a reason why the configuration information of the first candidate cell is fully applied.

In an embodiment, the first information block includes information about successfully handing over to the first candidate cell.

In an embodiment, the first information block includes information about random access to the first candidate cell.

In an embodiment, the first information block includes at least a measurement result of the first candidate cell.

In an embodiment, the first UE variable is VarRLF-Reportt.

In a sub-embodiment of the foregoing embodiment, the first information block is RLF-Report-r16.

In a sub-embodiment of the foregoing embodiment, the first information block is RLF-Report-r19.

In a sub-embodiment of the foregoing embodiment, the first information block is RLF-Report-r20.

In an embodiment, the first information block includes information related to the configuration information of the first candidate cell not being fully applied.

In an embodiment, the first information block includes a reason why the configuration information of the first candidate cell is not fully applied.

In an embodiment, the first information block includes the identifier of the first serving cell, the identifier of the first candidate cell, and the identifier of the second candidate cell.

In an embodiment, the first information block includes at least the identifier of the first serving cell.

In an embodiment, the first information block includes at least the identifier of the first candidate cell.

In an embodiment, the first information block includes at least the identifier of the second candidate cell.

In an embodiment, the first information block includes at least the identifier of the first serving cell and the identifier of the first candidate cell.

In an embodiment, the first information block includes at least the identifier of the first serving cell, the identifier of the first candidate cell, and the identifier of the second candidate cell.

In an embodiment, the first information block includes only the identifier of the second candidate cell.

In an embodiment, the first information block includes only the identifiers of the first candidate cell and the second candidate cell.

In a sub-embodiment of the foregoing embodiment, the identifier of the cell is a logical identifier.

In a sub-embodiment of the foregoing embodiment, the identifier of the cell includes an NCGI (NR Cell Global Identifier).

In a sub-embodiment of the foregoing embodiment, the identifier of the cell includes a CGI (Cell Global Identifier).

In a sub-embodiment of the foregoing embodiment, the identifier of the cell includes a PLMN (Public Land Mobile Network).

In a sub-embodiment of the foregoing embodiment, the identifier of the cell includes an SNPN (Stand-alone Non-Public Network).

In a sub-embodiment of the foregoing embodiment, the identifier of the cell includes one of the NCGI, the CGI, the PLMN, and the SNPN.

In a sub-embodiment of the foregoing embodiment, the identifier of the cell includes the PLMN and the CGI.

In a sub-embodiment of the foregoing embodiment, the identifier of the cell includes the SNPN and the CGI.

In a sub-embodiment of the foregoing embodiment, the identifier of the cell is a bit string.

In a sub-embodiment of the foregoing embodiment, the identifier of the cell uniquely indicates any of the cells in a tracking area (Tracking Area).

In a sub-embodiment of the foregoing embodiment, the identifier of the cell uniquely indicates any of the cells in a plurality of tracking areas.

In a sub-embodiment of the foregoing embodiment, the identifier of the cell uniquely indicates any of the cells in a PLMN.

In a sub-embodiment of the foregoing embodiment, the identifier of the cell uniquely indicates any of the cells in a plurality of PLMNs.

In a sub-embodiment of the foregoing embodiment, the identifier of the cell uniquely indicates any of the cells in an SNPN.

In a sub-embodiment of the foregoing embodiment, the identifier of the cell uniquely indicates any of the cells in a plurality of SNPNs.

In a sub-embodiment of the foregoing embodiment, the identifier of the cell includes a cell global identity (Cell Global Identity).

In a sub-embodiment of the foregoing embodiment, the identifier of the cell is a cell global identity and a tracking area code (Tracking Area Code).

In a sub-embodiment of the foregoing embodiment, the identifier of the cell includes a cell PCI (Physical Cell Identity).

In a sub-embodiment of the foregoing embodiment, the identifier of the cell is a cell PCI and a carrier frequency (Carrier Frequency).

In a sub-embodiment of the foregoing embodiment, if the cell global identity and the tracking area code of the first candidate cell and/or the first serving cell are available (available), the identifier of the cell is the cell global identity and the tracking area code of the first candidate cell and/or the first serving cell. Otherwise, the identifier of the cell is the cell PCI.

In an embodiment, that the configuration information of the first candidate cell includes the second information block means: The configuration information of the first candidate cell includes an index of the second information block.

In an embodiment, that the configuration information of the first candidate cell includes the second information block means: The configuration information of the first candidate cell indicates the second information block.

In an embodiment, that the configuration information of the first candidate cell includes the second information block means: The configuration information of the first candidate cell includes partial information of the second information block.

In an embodiment, that the configuration information of the first candidate cell includes the second information block means: The configuration information of the first candidate cell includes all of the second information block.

In an embodiment, that the second information block includes the configuration information of the second candidate cell and the second candidate cell is configured for the first candidate cell means: The second information block indicates configuration information of a subsequent candidate cell, and the second candidate cell is a subsequent candidate cell configured for the first candidate cell.

In an embodiment, that the second information block includes the configuration information of the second candidate cell and the second candidate cell is configured for the first candidate cell means: The second information block indicates the configuration information of the second candidate cell, and the second candidate cell is a candidate cell configured for the first candidate cell.

In an embodiment, the second information block includes subsequentCondReconfig-r18.

In an embodiment, the second information block is subsequentCondReconfig-r18.

In an embodiment, the second information block is for subsequent candidate cell configuration.

In an embodiment, a name of the second information block includes subsequent.

In an embodiment, the name of the second information block includes subsequent and LTM.

In an embodiment, the name of the second information block includes subsequent and CondReconfig.

In an embodiment, the name of the second information block includes subsequent and CHO.

In an embodiment, the name of the second information block includes scpac.

In an embodiment, the second information block includes scpac-ReferenceConfiguration-r18.

In an embodiment, scpac-ReferenceConfiguration-r18 included in the second information block is set to setup.

In an embodiment, the second information block includes subsequentCondReconfig-r18.

In an embodiment, the second information block includes subsequentCondReconfig-r19.

In an embodiment, the second information block includes subsequentCondReconfig-r20.

In an embodiment, that the second information block includes the configuration information of the second candidate cell means: The second information block includes a configuration execution condition for the second candidate cell.

In an embodiment, that the second information block includes the configuration information of the second candidate cell means: The second information block includes a cell identifier of the second candidate cell.

In an embodiment, that the second information block includes the configuration information of the second candidate cell means: The second information block indicates conditional configuration information of a plurality of cells including the second candidate cell, and at least the second candidate cell is configured for the first candidate cell.

In a sub-embodiment of the foregoing embodiment, that at least the second candidate cell is configured for the first candidate cell means: The second candidate cell is a subsequent candidate cell of the first candidate cell.

In a sub-embodiment of the foregoing embodiment, that at least the second candidate cell is configured for the first candidate cell means: The second candidate cell is a candidate cell of the first candidate cell.

In a sub-embodiment of the foregoing embodiment, that at least the second candidate cell is configured for the first candidate cell means: The plurality of cells including the second candidate cell are subsequent candidate cells of the first candidate cell.

In a sub-embodiment of the foregoing embodiment, that at least the second candidate cell is configured for the first candidate cell means: The plurality of cells including the second candidate cell are candidate cells of the first candidate cell.

In an embodiment, the first candidate cell is a PCell, the second candidate cell is a PCell, and the second information block is for subsequent CHO/LTM.

In an embodiment, the first candidate cell is a PCell, the second candidate cell is a PSCell, and the second information block is for subsequent CPA.

In an embodiment, the first candidate cell is a PSCell, the second candidate cell is a PSCell, and the second information block is for subsequent CPC.

In an embodiment, that the second candidate cell is configured for the first candidate cell means: The second information block indicates that the second candidate cell is configured for the first candidate cell.

In an embodiment, that the second candidate cell is configured for the first candidate cell means: The configuration information of the second candidate cell in the second information block being applied depends on the configuration information of the first candidate cell being applied.

### Embodiment 2

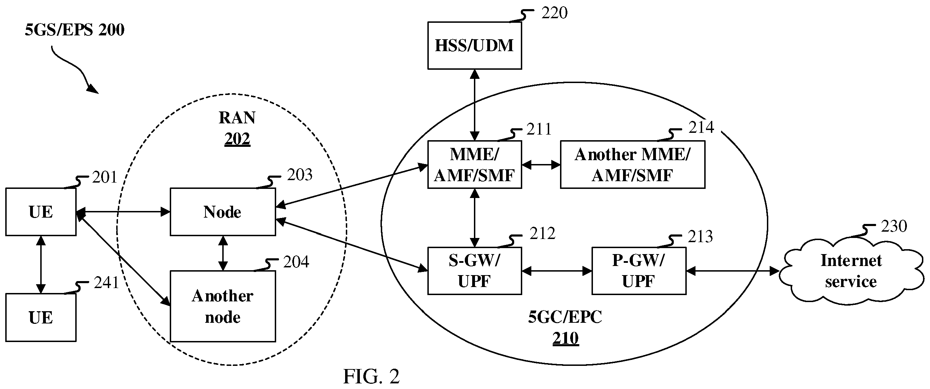

Embodiment 2 illustrates a schematic diagram of a network architecture according to an embodiment of this application, as shown in FIG. 2. FIG. 2 describes the network architecture 200 of a 5G NR (New Radio, new radio)/LTE (Long-Term Evolution, long term evolution)/LTE-A (Long-Term Evolution Advanced, long term evolution advanced) system. The 5G NR/LTE/LTE-A network architecture 200 may be referred to as a 5GS (5G System)/EPS (Evolved Packet System, evolved packet system) 200 or some other suitable terminology. The 5GS/EPS 200 includes at least one of a UE (User Equipment, user equipment) 201, a RAN (radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an internet service 230. The 5GS/EPS may be interconnected with another access network, but these entities/interfaces are not shown for simplicity. As shown in the figure, the 5GS/EPS provides a packet switching service. However, a person skilled in the art will readily understand that the various concepts presented throughout this application can be extended to a network providing a circuit switching service or another cellular network. The RAN includes a node 203 and another node 204. The node 203 provides user and control plane protocol termination towards the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a TRP (transmission reception point), or some other suitable terminology. The node 203 provides an access point to the 5GC/EPC 210 for the UE 201. Instances of the UE 201 include a cellular phone, a smart phone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, a drone, a flying machine, a narrowband internet of things device, a machine type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The node 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Date Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, internet protocol) packets are transmitted through the S-GW/UPF 212, and the S-GW/UPF 212 itself is connected to the P-GW/UPF 213. The P-GW provides UE IP address allocation and another function. The P-GW/UPF 213 is connected to the internet service 230. The internet service 230 includes an operator-corresponding internet protocol service, which may specifically include an internet, an intranet, an IMS (IP Multimedia Subsystem, IP multimedia subsystem), and a packet switching streaming service.

In an embodiment, the UE 201 corresponds to a first node in this application.

In an embodiment, the UE 201 is a user equipment (User Equipment, UE).

In an embodiment, the UE 201 is a base station (Base Station, BS) device.

In an embodiment, the UE 201 is a relay (Relay) device.

In an embodiment, the UE 201 is a gateway (Gateway) device.

In an embodiment, the node 203 corresponds to a second node in this application.

In an embodiment, the node 203 is a base station device.

In an embodiment, the node 203 is a user equipment.

In an embodiment, the node 203 is a relay device.

In an embodiment, the node 203 is a gateway device.

Typically, the UE 201 is a user equipment, and the node 203 is a base station device.

Typically, the UE 201 is a user equipment, and the node 203 is a user equipment.

Typically, the UE 201 is a base station device, and the node 203 is a base station device.

In an embodiment, the user equipment supports non-terrestrial network (Non-Terrestrial Network, NTN) transmission.

In an embodiment, the user equipment supports terrestrial network (Terrestrial Network, terrestrial network) transmission.

In an embodiment, the user equipment supports dual connection (Dual Connection, DC) transmission.

In an embodiment, the user equipment includes a flying machine.

In an embodiment, the user equipment includes a vehicle-mounted terminal.

In an embodiment, the user equipment includes a vessel.

In an embodiment, the user equipment includes an internet of things terminal.

In an embodiment, the user equipment includes an industrial internet of things terminal.

In an embodiment, the user equipment includes a device that supports low-latency and high-reliability transmission.

In an embodiment, the user equipment includes a test device.

In an embodiment, the user equipment includes a signaling tester.

In an embodiment, the user equipment includes an IAB (Integrated Access and Backhaul)-MT.

In an embodiment, the user equipment supports generating reporting using AI (Artificial Intelligence, artificial intelligence) or machine learning (Machine Learning).

In an embodiment, the user equipment supports applying subsequent candidate cell configuration using AI (Artificial Intelligence, artificial intelligence) or machine learning (Machine Learning).

In an embodiment, the user equipment supports storing related information of subsequent candidate cell configuration using AI (Artificial Intelligence) or machine learning (Machine Learning).

In an embodiment, the user equipment supports applying a first RRC message through training.

In an embodiment, the user equipment supports determining at least partial information in the first RRC message through training.

In an embodiment, the user equipment is a terminal that supports Massive-MIMO.

In an embodiment, the base station device supports transmission in a non-terrestrial network.

In an embodiment, the base station device supports transmission in a terrestrial network.

In an embodiment, the base station device includes a base transceiver station (Base Transceiver Station, BTS).

In an embodiment, the base station device includes a NodeB (NodeB, NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device includes a CU (Centralized Unit, central unit).

In an embodiment, the base station device includes a DU (Distributed Unit, distributed unit).

In an embodiment, the base station device includes a TRP (Transmitter Receiver Point, transmission reception point).

In an embodiment, the base station device includes a macro cellular (Marco Cellular) base station.

In an embodiment, the base station device includes a micro cell (Micro Cell) base station.

In an embodiment, the base station device includes a pico cell (Pico Cell) base station.

In an embodiment, the base station device includes a femtocell (Femtocell).

In an embodiment, the base station device includes a flying platform device.

In an embodiment, the base station device includes a satellite device.

In an embodiment, the base station device includes a test device.

In an embodiment, the base station device includes a signaling tester.

In an embodiment, the base station device includes a gateway device.

In an embodiment, the base station device includes an IAB-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the base station device supports transmission based on Massive-MIMO.

In an embodiment, the base station device supports network self-optimization and self-configuration.

In an embodiment, the base station device supports decompressing CSI using AI or deep learning.

In an embodiment, the base station device supports mobility management using AI or deep learning.

### Embodiment 3

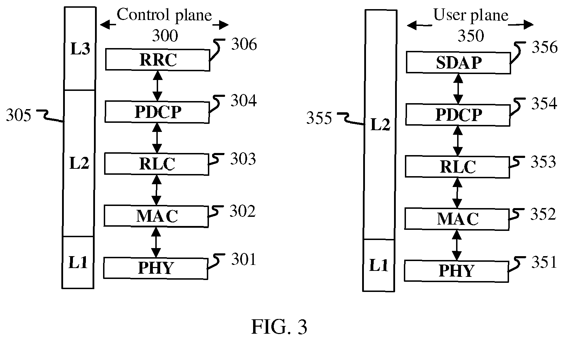

Embodiment 3 illustrates a schematic diagram of an embodiment of radio protocol architectures for a user plane and a control plane according to this application, as shown in FIG. 3. FIG. 3 is a schematic diagram describing the embodiment of the radio protocol architectures used for the user plane 350 and the control plane 300, and FIG. 3 shows a radio protocol architecture used for the control plane 300 with three layers of a layer 1, a layer 2, and a layer 3. The layer 1 (L1 layer) is a lowest layer and implements various PHY (physical layer) signal processing functions. The L1 layer is referred to as a PHY 301 herein. The layer 2 (L2 layer) 305 is above the PHY 301 and includes a MAC (Medium Access Control, medium access control) sublayer 302, an RLC (Radio Link Control, radio link control protocol) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 also provides security by encrypting a data packet, and provides inter-cell mobility support. The RLC sublayer 303 provides segmentation and reassembly of an upper layer data packet, retransmission of a lost data packet, and reordering of data packets to compensate for out-of-order receiving due to a HARQ (Hybrid Automatic Repeat Request, hybrid automatic repeat request). The MAC sublayer 302 provides multiplexing between logical and transmission channels. The MAC sublayer 302 is also responsible for allocating various radio resources (for example, resource blocks) in a cell. The MAC sublayer 302 is also responsible for a HARQ operation. An RRC (Radio Resource Control, radio resource control) sublayer 306 at the layer 3 (L3 layer) of the control plane 300 is responsible for obtaining a radio resource (for example, a radio bearer) and configuring a lower layer using RRC signaling. A radio protocol architecture of the user plane 350 includes a layer 1 (L1 layer) and a layer 2 (L2 layer). In the user plane 350, the radio protocol architecture for a physical layer 351, a PDCP sublayer 354 at the L2 layer 355, an RLC sublayer 353 at the L2 layer 355, and a MAC sublayer 352 at the L2 layer 355 is largely the same as corresponding layers and sublayers in the control plane 300, but the PDCP sublayer 354 also provides header compression for an upper layer data packet to reduce radio transmission overheads. The L2 layer 355 in the user plane 350 also includes an SDAP (Service Data Adaptation Protocol, service data adaptation protocol) sublayer 356, and the SDAP sublayer 356 is responsible for mapping between a QoS flow and a data radio bearer (DRB, Data Radio Bearer) to support service diversity.

In an embodiment, the radio protocol architecture in FIG. 3 is applicable to a first node in this application.

In an embodiment, the radio protocol architecture in FIG. 3 is applicable to a second node in this application.

In an embodiment, a first RRC message in this application is generated at the RRC 306.

In an embodiment, a second RRC message in this application is generated at the RRC 306.

In an embodiment, a third RRC message in this application is generated at the RRC 306.

### Embodiment 4

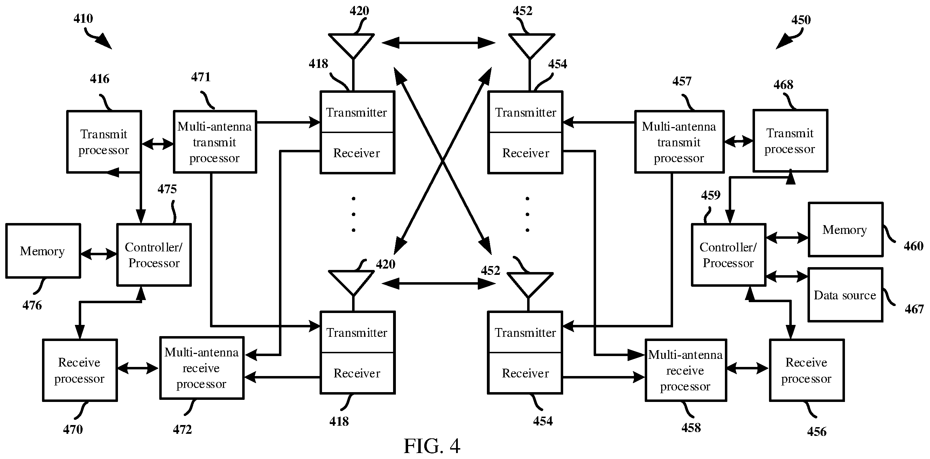

Embodiment 4 illustrates a schematic diagram of a first communication device and a second communication device according to this application, as shown in FIG. 4. FIG. 4 is a block diagram of the first communication device 450 and the second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper layer data packet from a core network is provided for the controller/processor 475. The controller/processor 475 implements a function of the L2 layer. During transmission from the second communication device 410 to the first communication device 450, the controller/processor 475 provides header compression, encryption, packet segmentation and reordering, multiplexing between logical and transport channels, and allocation of radio resources of the first communication device 450 based on various priority metrics. The controller/processor 475 is further responsible for retransmission of a lost packet, and signaling to the first communication device 450. The transmit processor 416 and the multi-antenna transmit processor 471 implement various signal processing functions of an L1 layer (namely, a physical layer). The transmit processor 416 implements encoding and interleaving to facilitate forward error correction (FEC) at the second communication device 410, and mapping of signal clusters based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmit processor 471 performs digital space precoding, including codebook-based precoding and non-codebook-based precoding, on an encoded and modulated symbol, and beamforming processing, to generate one or more spatial streams. The transmit processor 416 then maps each spatial stream to a subcarrier, multiplexes the mapped spatial stream with a reference signal (for example, a pilot) in time domain and/or frequency domain, and then uses inverse fast Fourier transform (IFFT) to generate a physical channel that carries a time-domain multicarrier symbol stream. Subsequently, the multi-antenna transmit processor 471 performs an operation of analog precoding sending/beamforming on the time-domain multicarrier symbol stream. Each transmitter 418 converts a baseband multicarrier symbol stream provided by the multi-antenna transmit processor 471 into a radio frequency stream, and then provides the radio frequency stream for different antennas 420.

During transmission from the second communication device 410 to the first communication device 450, at the first communication device 450, each receiver 454 receives a signal through a corresponding antenna 452 of the receiver 454. Each receiver 454 recovers information modulated onto a radio frequency carrier, converts a radio frequency stream into a baseband multicarrier symbol stream, and provides the baseband multicarrier symbol stream for the receive processor 456. The receive processor 456 and the multi-antenna receive processor 458 implement various signal processing functions of the L1 layer. The multi-antenna receive processor 458 performs an operation of analog precoding receiving/beamforming on the baseband multicarrier symbol stream from the receiver 454. The receive processor 456 converts, from time domain to frequency domain via fast Fourier transform (FFT), the baseband multicarrier symbol stream obtained after the operation of analog precoding receiving/beamforming. In frequency domain, a physical-layer data signal and a reference signal are demultiplexed by the receive processor 456. The reference signal is used for channel estimation; and the data signal is recovered after multi-antenna detection performed by the multi-antenna receive processor 458, to obtain any spatial stream that uses the first communication device 450 as a destination. A symbol on each spatial stream is demodulated and recovered in the receive processor 456, and a soft decision is generated. The receive processor 456 then decodes and de-interleaves the soft decision to recover upper layer data and a control signal transmitted by the second communication device 410 on a physical channel. The upper layer data and the control signal are then provided for the controller/processor 459. The controller/processor 459 implements functions of the L2 layer. The controller/processor 459 may be associated with the memory 460 that stores program code and data. The memory 460 may be referred to as a computer-readable medium. During transmission from the second communication device 410 to the first communication device 450, the controller/processor 459 provides demultiplexing between transport and logical channels, packet reassembly, decryption, header decompression, and control signal processing, to recover the upper layer data packet from the core network. The upper layer data packet is then provided for all protocol layers above the L2 layer, or various control signals may be provided for an L3 for processing by the L3.

During transmission from the first communication device 450 to the second communication device 410, at the first communication device 450, an upper layer data packet is provided for the controller/processor 459 by using the data source 467. The data source 467 represents all protocol layers above the L2 layer. Similar to the sending function, at the second communication device 410, described during the transmission from the second communication device 410 to the first communication device 450, the controller/processor 459 implements header compression, encryption, packet segmentation and reordering, and multiplexing between logical and transport channels based on radio resource allocation, to implement functions of the L2 layer for a user plane and a control plane. The controller/processor 459 is further responsible for retransmission of a lost packet, and signaling to the second communication device 410. The transmit processor 468 performs modulation mapping and channel encoding processing, and the multi-antenna transmit processor 457 performs digital multi-antenna spatial precoding, including codebook-based precoding and non-codebook-based precoding, and beam forming processing. Then the transmit processor 468 modulates a generated spatial stream into a multicarrier/single-carrier symbol stream, and the multicarrier/single-carrier symbol stream is provided for different antennas 452 by using the transmitter 454 after undergoing an analog precoding/beamforming operation in the multi-antenna transmit processor 457. Each transmitter 454 first converts a baseband symbol stream provided by the multi-antenna transmit processor 457 into a radio frequency symbol stream, and then provides the radio frequency symbol stream for the antenna 452.

During transmission from the first communication device 450 to the second communication device 410, a function at the second communication device 410 is similar to the receiving function, at the first communication device 450, described during the transmission from the second communication device 410 to the first communication device 450. Each receiver 418 receives a radio frequency signal through a corresponding antenna 420 of the receiver 418, converts the received radio frequency signal into a baseband signal, and provides the baseband signal for the multi-antenna receive processor 472 and the receive processor 470. The receive processor 470 and the multi-antenna receive processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. During transmission from the first communication device 450 to the second communication device 410, the controller/processor 475 provides demultiplexing between transport and logical channels, packet reassembly, decryption, header decompression, and control signal processing, to recover an upper layer data packet from the UE 450. An upper layer data packet from the controller/processor 475 may be provided for the core network.

In an embodiment, the first communication device 450 corresponds to a first node in this application. The first communication device 450 includes: at least one processor and at least one memory, where the at least one memory includes computer program code; receiving a first RRC message, where the first RRC message includes configuration information of a first candidate cell, and the first candidate cell is configured for a first serving cell; and in response to at least the configuration information of the first candidate cell being applied, setting a first information block in a first UE variable. The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, the first communication device 450 corresponds to a first node in this application. The first communication device 450 includes: a memory storing a computer-readable instruction program, where the computer-readable instruction program, when executed by at least one processor, generates actions, and the actions include: receiving a first RRC message, where the first RRC message includes configuration information of a first candidate cell, and the first candidate cell is configured for a first serving cell; and in response to at least the configuration information of the first candidate cell being applied, setting a first information block in a first UE variable. The configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, the second communication device 410 corresponds to a second node in this application. The second communication device 410 includes: at least one processor and at least one memory. The at least one memory includes computer program code, and the at least one memory and the computer program code are configured to be used with the at least one processor. The second communication device 410 at least: sends a first RRC message, where the first RRC message includes configuration information of a first candidate cell, and the first candidate cell is configured for a first serving cell. In response to at least the configuration information of the first candidate cell being applied, a recipient of the first RRC message sets a first information block in a first UE variable; the configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, the second communication device 410 corresponds to a second node in this application. The second communication device 410 includes: a memory storing a computer-readable instruction program, where the computer-readable instruction program, when executed by at least one processor, generates actions, and the actions include: sending a first RRC message, where the first RRC message includes configuration information of a first candidate cell, and the first candidate cell is configured for a first serving cell. In response to at least the configuration information of the first candidate cell being applied, a recipient of the first RRC message sets a first information block in a first UE variable; the configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, at least one of the antenna 420, the transmitter 418, the transmit processor 416, and the controller/processor 475 is used to send the first RRC message.

In an embodiment, at least one of the antenna 452, the receiver 454, the receive processor 456, and the controller/processor 459 is used to receive the first RRC message.

In an embodiment, at least one of the antenna 420, the transmitter 418, the transmit processor 416, and the controller/processor 475 is used to send a second RRC message.

In an embodiment, at least one of the antenna 452, the receiver 454, the receive processor 456, and the controller/processor 459 is used to receive the second RRC message.

In an embodiment, at least one of the antenna 452, the transmitter 454, the transmit processor 468, and the controller/processor 459 is used to send a third RRC message.

In an embodiment, at least one of the antenna 420, the receiver 418, the receive processor 470, and the controller/processor 475 is used to receive the third RRC message.

In an embodiment, the first communication device 450 corresponds to the first node in this application.

In an embodiment, the second communication device 410 corresponds to the second node in this application.

In an embodiment, the first communication device 450 is a user equipment.

In an embodiment, the first communication device 450 is a base station device.

In an embodiment, the first communication device 450 is a relay device.

In an embodiment, the second communication device 410 is a user equipment.

In an embodiment, the second communication device 410 is a base station device.

In an embodiment, the second communication device 410 is a relay device.

### Embodiment 5

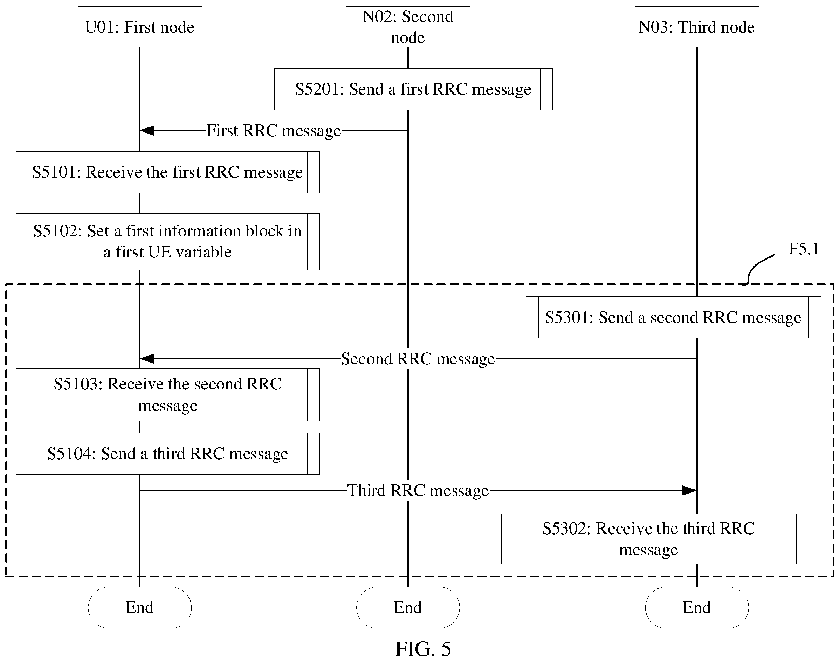

Embodiment 5 illustrates a flowchart of transmission of a wireless signal according to an embodiment of this application, as shown in FIG. 5. It should be particularly noted that an order in this example does not limit a signal transmission order and an implementation order in this application.

For a **first node U01**, in step S5101, receive a first RRC message, where the first RRC message includes configuration information of a first candidate cell, and the first candidate cell is configured for a first serving cell; in step S5102, in response to the configuration information of the first candidate cell being applied, set a first information block in a first UE variable; in step S5103, receive a second RRC message, where the second RRC message includes a first request indication; and in step S5104, in response to the second RRC message being received, send a third RRC message.

For a **second node N02**, in step S5201, send the first RRC message.

For a **third node N03**, in step S5301, send the second RRC message; and in step S5302, receive the third RRC message.

In Embodiment 5, the configuration information of the first candidate cell includes a second information block, the second information block includes configuration information of a second candidate cell, and the second candidate cell is configured for the first candidate cell; and the first information block includes at least an identifier of the first serving cell, an identifier of the first candidate cell, and an identifier of the second candidate cell.

In an embodiment, the third RRC message includes the first information block in the first UE variable; and that the third RRC message includes the first information block in the first UE variable depends on the first request indication.

In an embodiment, the first node is a UE.

In an embodiment, the first node is a UE that supports the 3GPP R19.

In an embodiment, the first node is a UE that supports 6G.

In an embodiment, the first node is a UE that supports SON/MDT.

In an embodiment, the first node is a UE that supports information storage.

In an embodiment, the first node is not a UE.

In an embodiment, the first node U01 and the second node N02 are connected in a wireless manner.

In an embodiment, the first node U01 and the second node N02 are connected in a wired manner.

In an embodiment, the first node U01 and the second node N02 are connected through a Uu interface.

In an embodiment, the first node U01 and the second node N02 are connected through an IAB interface.

In an embodiment, the first node U01 and the second node N02 are connected through a PC5 interface.

In an embodiment, the third node N03 and the second node N02 are connected through a wireless interface.

In an embodiment, the third node N03 and the second node N02 are connected through a wired interface.

In an embodiment, the third node N03 and the second node N02 are connected through an Xn interface.

In an embodiment, the third node N03 and the second node N02 are connected through an X2 interface.

In an embodiment, there is an ideal backhaul between the third node N03 and the second node N02.

In an embodiment, there is a non-ideal backhaul between the third node N03 and the second node N02.

In an embodiment, the third node N03 is the second node N02.

In an embodiment, the third node N03 is not the second node N02.

In an embodiment, the second node N02 is a maintenance base station of a cell served by the first node U01.

In an embodiment, the second node N02 is a maintenance base station of the first serving cell.

In an embodiment, the third node N03 is a maintenance base station of the first serving cell.

In an embodiment, the second node N02 is a maintenance base station of the first candidate cell.

In an embodiment, the third node N03 is a maintenance base station of the first candidate cell.

In an embodiment, the second node N02 is a maintenance base station of a subsequent candidate cell of the first candidate cell.

In an embodiment, the third node N03 is a maintenance base station of a subsequent candidate cell of the first candidate cell.

In an embodiment, in response to the third RRC message being received, the third node N03 forwards the third RRC message to the second node N02.

In an embodiment, based on an indication in the third RRC message, the third node N03 forwards at least partial information in the third RRC message to the second node N02.

In an embodiment, the first node U01 receives the first RRC message.

In a sub-embodiment of the foregoing embodiment, before the first message is received, the first node U01 is connected to the first serving cell.

In a sub-embodiment of the foregoing embodiment, before the first message is received, the first serving cell is a current serving cell of the first node U01.

In a sub-embodiment of the foregoing embodiment, with the first RRC message being received, the first node U01 is connected to the first serving cell.

In a sub-embodiment of the foregoing embodiment, in response to the first RRC message being received, the first node U01 is connected to the first serving cell.

In a sub-embodiment of the foregoing embodiment, after the first RRC message is received, the first node U01 is connected to the first serving cell.

In a sub-embodiment of the foregoing embodiment, the connection is performing a handover.

In a sub-embodiment of the foregoing embodiment, the connection is performing a switch (switch).

In a sub-embodiment of the foregoing embodiment, the connection is performing initial access.

In a sub-embodiment of the foregoing embodiment, the connection is performing random access.

In a sub-embodiment of the foregoing embodiment, the connection is performing a reconnection.

In a sub-embodiment of the foregoing embodiment, after the first RRC message is received, configuration of the first candidate cell is started.

In a sub-embodiment of the foregoing embodiment, after the first RRC message is received, the first candidate cell is configured for the first serving cell.

In a sub-embodiment of the foregoing embodiment, after the first RRC message is received, the configuration information of the first candidate cell is applied.

In a sub-embodiment of the foregoing embodiment, after the first RRC message is received, before departure from the first serving cell, the configuration information of the first candidate cell is applied.

In a sub-embodiment of the foregoing embodiment, after the first RRC message is received, when departure from the first serving cell is performed, the configuration information of the first candidate cell is applied.

In a sub-embodiment of the foregoing embodiment, the departure means disconnecting.

In a sub-embodiment of the foregoing embodiments, the departure means handing over to the first candidate cell.

In a sub-embodiment of the foregoing embodiment, the departure means initiating a connection to the first candidate cell.

In a sub-embodiment of the foregoing embodiment, the departure means that the first node U01 enters a state other than a CONNECT state.

In an embodiment, the first node U01 sets the first information block in the first UE variable.

In a sub-embodiment of the foregoing embodiment, after the configuration information of the first candidate cell is fully applied, the first node U01 is handed over to the first candidate cell and sets the first information block in the first UE variable.

In a sub-embodiment of the foregoing embodiment, after the configuration information of the first candidate cell is fully applied, the first node U01 accesses the first candidate cell and sets the first information block in the first UE variable.

In an embodiment, a dashed box F5.1 is optional.

In an embodiment, the dashed box F5.1 exists.

In an embodiment, the first node U01 receives the second RRC message.

In a sub-embodiment of the foregoing embodiment, the receiving of the second RRC message is after the first RRC message is received.

In a sub-embodiment of the foregoing embodiment, the receiving of the second RRC message is after the first information block is set.

In a sub-embodiment of the foregoing embodiment, the second RRC message is sent on the first candidate cell.

In a sub-embodiment of the foregoing embodiment, the second RRC message is sent on the second candidate cell.

In a sub-embodiment of the foregoing embodiment, the second RRC message is sent on a subsequent candidate cell configured for the first candidate cell.

In a sub-embodiment of the foregoing embodiment, the second RRC message is sent on the first serving cell.

In a sub-embodiment of the foregoing embodiment, the second RRC message includes a UEInformationRequest message.

In a sub-embodiment of the foregoing embodiment, the second RRC message is a UEInformationRequest message.

In a sub-embodiment of the foregoing embodiment, a sender of the second RRC message and a sender of the first RRC message are the same.

In a sub-embodiment of the foregoing embodiment, the sender of the second RRC message and the sender of the first RRC message are different.

In a sub-embodiment of the foregoing embodiment, the sender of the second RRC message and the sender of the first RRC message are related.

In a sub-embodiment of the foregoing embodiment, the sender of the second RRC message and the sender of the first RRC message are related.

In a sub-embodiment of the foregoing embodiment, the sender of the second RRC message is a candidate cell of the sender of the first RRC message.

In a sub-embodiment of the foregoing embodiment, the sender of the second RRC message is a subsequent candidate cell of the sender of the first RRC message.

In a sub-embodiment of the foregoing embodiment, before the second RRC message is received, the first node U01 sends a first indication message, and the first indication message indicates that the first UE variable is stored in the first node U01.

In an attached embodiment of the foregoing sub-embodiment, the first indication message indicates availability information of the first UE variable stored in the first node U01.

In an attached embodiment of the foregoing sub-embodiment, the first indication message includes partial information of the first UE variable stored in the first node U01.

In an attached embodiment of the foregoing sub-embodiment, the first indication message indicates availability information of the first information block in the first UE variable stored in the first node U01.

In an attached embodiment of the foregoing sub-embodiment, the first indication message includes partial information of the first information block in the first UE variable stored in the first node U01.

In an attached embodiment of the foregoing sub-embodiment, the first indication message includes an RRCReconfigurationComplete message.

In an attached embodiment of the foregoing sub-embodiment, the first indication message is an RRCReconfigurationComplete message.

In an attached embodiment of the foregoing sub-embodiment, the first indication message includes a UEAssistanceInformation message.

In an attached embodiment of the foregoing sub-embodiment, the first indication message is a UEAssistanceInformation message.

In a sub-embodiment of the foregoing embodiment, before the second RRC message is received, the first node U01 does not send any message to a network.

In a sub-embodiment of the foregoing embodiment, the second RRC message includes the first request indication for indicating sending of the third RRC message.

In an attached embodiment of the foregoing sub-embodiment, when the second RRC message includes the first request indication, the first node U01 sends the third RRC message.

In an attached embodiment of the foregoing sub-embodiment, when at least the second RRC message includes the first request indication, the first node U01 sends the third RRC message.

In an attached embodiment of the foregoing sub-embodiment, when the second RRC message includes the first request indication and the first request indication indicates to send the third RRC message, the first node U01 sends the third RRC message.

In a sub-embodiment of the foregoing embodiment, the first request indication includes successHO-ReportReq-r17.

In a sub-embodiment of the foregoing embodiment, the first request indication includes successPSCell-ReportReq-r18.

In a sub-embodiment of the foregoing embodiment, a name of the first request indication includes subsequent.

In a sub-embodiment of the foregoing embodiment, the name of the first request indication includes scpac.

In a sub-embodiment of the foregoing embodiment, the name of the first request indication includes ReportReq.

In a sub-embodiment of the foregoing embodiment, the first request indication is subsequentCPAC-ReportReq-r19.

In a sub-embodiment of the foregoing embodiment, the first request indication is subsequentCPAC-ReportReq-r20.

In a sub-embodiment of the foregoing embodiment, the first request indication is scpac-ReportReq-r19.

In a sub-embodiment of the foregoing embodiment, the first request indication is scpac-ReportReq-r20.

In an embodiment, the first node U01 sends the third RRC message.

In an embodiment, the sending of the third RRC message and the receiving of the second RRC message are coupled.

In an embodiment, the second RRC message being received triggers the sending of the third RRC message.

In an embodiment, in response to the second RRC message being received, the third RRC message is sent.

In an embodiment, the sending of the third RRC message and the receiving of the second RRC message are decoupled.

In a sub-embodiment of the foregoing embodiment, the second RRC message includes a UEInformationRequest message, and the third RRC message includes a UEInformationResponse message.

In a sub-embodiment of the foregoing embodiment, the second RRC message is a UEInformationRequest message, and the third RRC message is a UEInformationResponse message.

In a sub-embodiment of the foregoing embodiment, the second RRC message is not a UEInformationRequest message, and the third RRC message is a UEInformationResponse message.

In a sub-embodiment of the foregoing embodiment, the third RRC message includes a UEInformationResponse message.

In a sub-embodiment of the foregoing embodiment, the third RRC message is a UEInformationResponse message.

In a sub-embodiment of the foregoing embodiment, that the third RRC message includes the first information block in the first UE variable means: The third RRC message includes all information of the first information block in the first UE variable.

In a sub-embodiment of the foregoing embodiment, that the third RRC message includes the first information block in the first UE variable means: The third RRC message includes partial information of the first information block in the first UE variable.

In a sub-embodiment of the foregoing embodiment, that the third RRC message includes the first information block in the first UE variable means: The third RRC message includes information, indicated by the first request indication, in the first information block in the first UE variable.

In a sub-embodiment of the foregoing embodiment, that the third RRC message including the first information block in the first UE variable depends on the first request indication means: In response to the first request indication being received, the third RRC message includes the first information block in the first UE variable.

In a sub-embodiment of the foregoing embodiment, that the third RRC message including the first information block in the first UE variable depends on the first request indication means: After the first request indication is received, the third RRC message includes the first information block in the first UE variable.

In a sub-embodiment of the foregoing embodiment, that the third RRC message including the first information block in the first UE variable depends on the first request indication means: After at least the first request indication is received, the third RRC message includes the first information block in the first UE variable.

In a sub-embodiment of the foregoing embodiment, that the third RRC message including the first information block in the first UE variable depends on the first request indication means: Once the first request indication is received, the third RRC message includes the first information block in the first UE variable.

In a sub-embodiment of the foregoing embodiment, that the third RRC message including the first information block in the first UE variable depends on the first request indication means: The first request indication is set, to indicate that the third RRC message includes the first information block in the first UE variable.

In an embodiment, the dashed box F5.1 does not exist.

In a sub-embodiment of the foregoing embodiment, after setting content of the first information block in the first UE variable is completed, the first node U01 reports the first information block stored in the first UE variable.

In a sub-embodiment of the foregoing embodiment, after setting content of the first information block in the first UE variable is completed, the first node U01 reports availability information of the first information block stored in the first UE variable.

In a sub-embodiment of the foregoing embodiment, after setting content of the first information block in the first UE variable is completed, the first node U01 starts a timer, and when the timer expires, the first node U01 autonomously reports the first information block stored in the first UE variable.

In a sub-embodiment of the foregoing embodiment, after setting content of the first information block in the first UE variable is completed, the first node U01 starts a timer, and when the timer expires, the first node U01 autonomously releases the first information block stored in the first UE variable.

### Embodiment 6

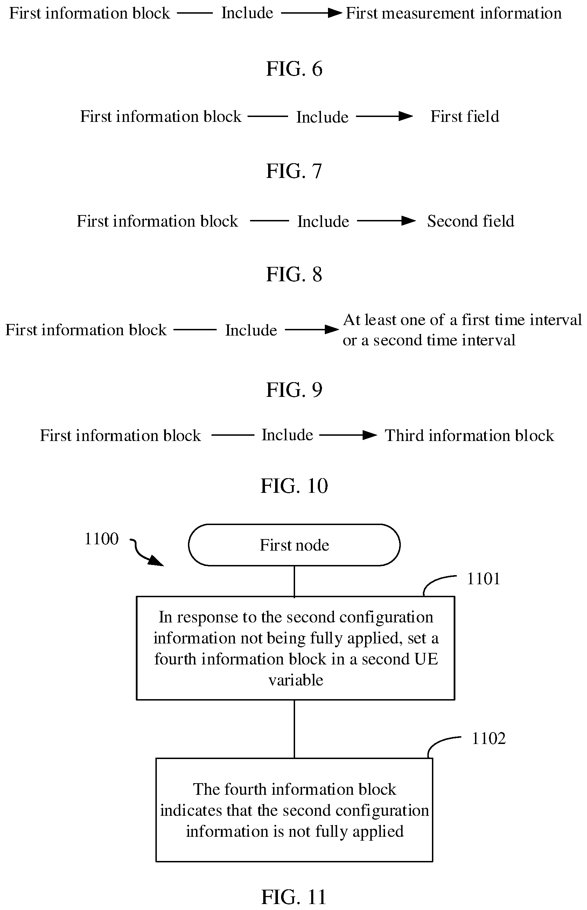

Embodiment 6 illustrates a schematic diagram of a first information block including first measurement information according to an embodiment of this application, as shown in FIG. 6.

In Embodiment 6, the first information block includes the first measurement information, the first measurement information depends on measurement performed on at least a second candidate cell based on a second information block, and the second candidate cell is a subsequent candidate cell.

In an embodiment, when the second information block is applied, the first information block includes the first measurement information.

In an embodiment, when at least the second information block is applied, the first information block includes the first measurement information.

In an embodiment, only when the second information block is applied, the first information block includes the first measurement information.

In an embodiment, after the second information block is applied, the first information block includes the first measurement information.

In an embodiment, when configuration information of the second candidate cell in the second information block is applied, the first information block includes the first measurement information.

In an embodiment, when at least the configuration information of the second candidate cell in the second information block is applied, the first information block includes the first measurement information.

In an embodiment, only when the configuration information of the second candidate cell in the second information block is applied, the first information block includes the first measurement information.

In an embodiment, after the configuration information of the second candidate cell in the second information block is applied, the first information block includes the first measurement information.

In an embodiment, whether the first measurement information is set depends on the measurement performed on at least the second candidate cell based on the second information block.

In an embodiment, when a first node performs measurement on at least the second candidate cell based on the second information block, the first measurement information is set.

In an embodiment, when at least the first node performs measurement on at least the second candidate cell based on the second information block, the first measurement information is set.

In an embodiment, only when at least the first node performs measurement on at least the second candidate cell based on the second information block, the first measurement information is set.

In an embodiment, after the first node performs measurement on at least the second candidate cell based on the second information block, the first measurement information is set.

In an embodiment, when the first node performs measurement on at least the second candidate cell based on the second information block, the first measurement information is not set.

In an embodiment, when at least the first node performs measurement on at least the second candidate cell based on the second information block, the first measurement information is not set.

In an embodiment, only when the first node performs measurement on at least the second candidate cell based on the second information block, the first measurement information is not set.

In an embodiment, content in the first measurement information depends on the measurement performed on at least the second candidate cell based on the second information block.

In an embodiment, the first measurement information includes a measurement result of the measurement performed on at least the second candidate cell based on the second information block.

In an embodiment, the first measurement information includes location information of the first node when the first measurement information is set.

In an embodiment, the first measurement information includes a moving speed of the first node when the first measurement information is set.

In an embodiment, the first measurement information includes an average moving speed of the first node in a cell where measurement is performed.

In a sub-embodiment of the foregoing embodiment, the cell where the measurement is performed refers to a current serving cell.

In a sub-embodiment of the foregoing embodiment, the cell where the measurement is performed refers to a neighboring cell of a current serving cell.

In a sub-embodiment of the foregoing embodiment, the cell where the measurement is performed refers to the second candidate cell.

In a sub-embodiment of the foregoing embodiment, the cell where the measurement is performed refers to a candidate cell.

In a sub-embodiment of the foregoing embodiment, the cell where the measurement is performed refers to a subsequent candidate cell.

In a sub-embodiment of the foregoing embodiment, the cell where the measurement is performed refers to a cell indicated by an additional PCI.

In a sub-embodiment of the foregoing embodiment, the performing the measurement includes: monitoring signal quality of a downlink reference signal.

In a sub-embodiment of the foregoing embodiment, the performing the measurement includes: obtaining a measurement result obtained by using a downlink reference signal.

In a sub-embodiment of the foregoing embodiment, the performing the measurement includes: storing a measurement result obtained by using a downlink reference signal.

In a sub-embodiment of the foregoing embodiment, the downlink reference signal is an SSB.

In a sub-embodiment of the foregoing embodiment, the downlink reference signal is a CSI (Channel State Information, channel state information)-RS.

In a sub-embodiment of the foregoing embodiment, the downlink reference signal is an SSB and a CSI-RS.

In an embodiment, the downlink reference signal is a CRS (Cell-Specific Reference Signal, cell-specific reference signal).

In an embodiment, the downlink reference signal is a PRS (Positioning Reference Signal, positioning reference signal).

In a sub-embodiment of the foregoing embodiment, the downlink reference signal is a reference information other than an SSB and a CSI-RS.

In a sub-embodiment of the foregoing embodiment, the measurement result refers to RSRP (Reference Signal Received Power, reference signal received power).

In a sub-embodiment of the foregoing embodiment, the measurement result refers to RSRQ (Reference Signal Received Quality, reference signal received quality).

In a sub-embodiment of the foregoing embodiment, the measurement result refers to a SINR (Signal to Interference plus Noise Ratio, signal to interference plus noise ratio).

In a sub-embodiment of the foregoing embodiment, the measurement result refers to any two of RSRP, RSRQ, and a SINR.

In a sub-embodiment of the foregoing embodiment, the measurement result refers to RSRP, RSRQ, and a SINR.

In a sub-embodiment of the foregoing embodiment, the measurement result refers to a measurement result other than RSRP, RSRQ, and a SINR.

In a sub-embodiment of the foregoing embodiment, the measurement result refers to a measurement result after L1 filtering.

In a sub-embodiment of the foregoing embodiment, the measurement result refers to a measurement result after L3 filtering.

In a sub-embodiment of the foregoing embodiment, the performing the measurement includes: determining a location of the first node.

In an embodiment, the first measurement information includes a best measurement result measured in at least the second candidate cell.

In an embodiment, the first measurement information includes a worst measurement result measured in at least the second candidate cell.

In an embodiment, the first measurement information includes a measurement result of the measurement performed in at least the second candidate cell based on the configuration information of the second candidate cell.

In an embodiment, the first measurement information includes an index of the measurement result of the measurement performed in at least the second candidate cell based on the configuration information of the second candidate cell.

In an embodiment, the at least the second candidate cell means: a subsequent candidate cell including the second candidate cell.

In an embodiment, the at least the second candidate cell means: a neighboring cell including the second candidate cell.

In an embodiment, the at least the second candidate cell means: including the second candidate cell and the first candidate cell.

In an embodiment, the at least the second candidate cell means: including the second candidate cell, the first candidate cell, and the first serving cell.

In an embodiment, the first measurement information includes measResultNeighCells.

In an embodiment, the first measurement information includes measResultSubsequentCells.

In an embodiment, the first measurement information includes MeasResultSuccessHONR.

In an embodiment, the first measurement information includes targetPSCellInfo.

In an embodiment, the first measurement information includes targetPSCellMeas.

In an embodiment, the first measurement information is measResultNeighCells.

In an embodiment, the first measurement information is measResultSubsequentCells.

In an embodiment, the first measurement information is MeasResultSuccessHONR.

In an embodiment, the first measurement information is targetPSCellInfo.

In an embodiment, the first measurement information is targetPSCellMeas.

In an embodiment, a name of the first measurement information includes measResult.

In an embodiment, the name of the first measurement information includes Meas.

In an embodiment, the name of the first measurement information includes Subsequent.

In an embodiment, the name of the first measurement information includes scpac.

In an embodiment, the name of the first measurement information includes CHO.

In an embodiment, the name of the first measurement information includes LTM.

In an embodiment, the first information block includes that the first measurement information depends on a first measurement indication.

In an embodiment, a first RRC message includes the first measurement indication.

In an embodiment, the first measurement indication is set to true, and the first information block includes the first measurement information.

In an embodiment, the first measurement indication exists, and the first information block includes the first measurement information.

In an embodiment, the first measurement indication is set to setup, and the first information block includes the first measurement information.

In an embodiment, the first measurement indication is configured by a field in the first RRC message, and the field belongs to MeasConfig IE.

In an embodiment, the first measurement indication is configured by a field in the first RRC message, and the field is for reporting a subsequent candidate cell.

In an embodiment, the first measurement indication is a signaling below an RRC sublayer.

In an embodiment, that the first information block includes the first measurement information depends on that the first RRC message includes the first measurement indication and the measurement performed by the second information block on at least the second candidate cell, and the second candidate cell is a subsequent candidate cell.

### Embodiment 7

Embodiment 7 illustrates a schematic diagram of a first information block including a first field according to an embodiment of this application, as shown in FIG. 7.

In Embodiment 7, the first information block includes the first field, and the first field indicates whether configuration information of a second candidate cell is applied.

In an embodiment, the first field indicates whether the configuration information of the second candidate cell is applied, and the second candidate cell is a subsequent candidate cell.

In an embodiment, the first field indicates whether the configuration information of the second candidate cell is applied after configuration information of a first candidate cell is applied.

In a sub-embodiment of the foregoing embodiment, after the configuration information of the first candidate cell is applied, the configuration information of the second candidate cell is applied.

In a sub-embodiment of the foregoing embodiment, after the configuration information of the first candidate cell is applied, the configuration information of the second candidate cell is not applied.

In an embodiment, the first field exists, which indicates that the configuration information of the second candidate cell is applied.

In an embodiment, the first field does not exist, which indicates that the configuration information of the second candidate cell is applied.

In an embodiment, the first field is set, which indicates that the configuration information of the second candidate cell is applied.

In an embodiment, the first field exists, which indicates that the configuration information of the second candidate cell is not applied.

In an embodiment, the first field does not exist, which indicates that the configuration information of the second candidate cell is not applied.

In an embodiment, the first field is set, which indicates that the configuration information of the second candidate cell is not applied.

In an embodiment, that the first field is set means: The first field is set to a value.

In an embodiment, that the first field is set means: The first field is set to true.

In an embodiment, that the first field is set means: The first field is set to setup.

In an embodiment, that the first field is set means: Information related to the configuration information of the second candidate cell being applied in the first field is set.

In an embodiment, that the configuration information of the second candidate cell is applied means: Measurement is performed on the second candidate cell based on the configuration information of the second candidate cell.

In an embodiment, that the configuration information of the second candidate cell is applied means: A measurement result of performing the measurement on the second candidate cell based on the configuration information of the second candidate cell satisfies an execution condition.

In an embodiment, that the configuration information of the second candidate cell is applied means: The second candidate cell is selected as a handover target cell.

In an embodiment, that the configuration information of the second candidate cell is applied means: A first node performs configuration in RRCReconfiguration of the second candidate cell.

In an embodiment, that the configuration information of the second candidate cell is applied means: Random access is performed on the second candidate cell based on the configuration information of the second candidate cell.

In an embodiment, that the configuration information of the second candidate cell is applied means: A handover is performed on the second candidate cell based on the configuration information of the second candidate cell.

In an embodiment, that the configuration information of the second candidate cell is applied means: A preamble is sent to the second candidate cell on a configured time-frequency resource based on the configuration information of the second candidate cell.

In an embodiment, that the configuration information of the second candidate cell is applied means: Listening for specified signaling is performed on the second candidate cell based on the configuration information of the second candidate cell.

In an embodiment, that the configuration information of the second candidate cell is applied means: Data reception is performed on the second candidate cell based the configuration information of the second candidate cell.

In an embodiment, that the configuration information of the second candidate cell is applied means: Signaling transmission is performed on the second candidate cell based on the configuration information of the second candidate cell.

In an embodiment, that the configuration information of the second candidate cell is applied means: The first node stores related information of the second candidate cell in a UE variable.

In an embodiment, that the first information block includes the first field depends on the configuration information of the first candidate cell being applied, and the configuration information of the first candidate cell includes a second information block.

In an embodiment, when the configuration information of the first candidate cell is applied, the first information block includes the first field.

In an embodiment, when at least the configuration information of the first candidate cell is applied, the first information block includes the first field.

In an embodiment, after the configuration information of the first candidate cell is applied, the first information block includes the first field.

In an embodiment, that the first information block includes the first field depends on the configuration information of the second candidate cell being applied.

In an embodiment, when the configuration information of the second candidate cell is applied, the first information block includes the first field.

In an embodiment, when at least the configuration information of the second candidate cell is applied, the first information block includes the first field.

In an embodiment, after the configuration information of the second candidate cell is applied, the first information block includes the first field.

In an embodiment, that content of the first field is set depends on the configuration information of the second candidate cell being applied.

In an embodiment, after the configuration information of the first candidate cell is applied, part of the content of the first field is set; and after the configuration information of the second candidate cell is applied, all of the content of the first field is set.

In an embodiment, after the configuration information of the first candidate cell is applied, the first information block includes the first field, and the content of the first field is not set; and after the configuration information of the second candidate cell is applied, the content of the first field is set.

In an embodiment, the second candidate cell is a subsequent candidate cell configured for the first candidate cell.

In an embodiment, the being applied includes being fully applied.

In an embodiment, the being applied includes not being fully applied.

In an embodiment, a name of the first field includes subsequent.

In an embodiment, the name of the first field includes scpac.

In an embodiment, the name of the first field includes subsequentCPAC.

In an embodiment, the name of the first field includes subsequentCHO.

In an embodiment, the name of the first field includes subsequentLTM.

In an embodiment, the name of the first field includes report.

In an embodiment, the first field is for a candidate cell.

In an embodiment, the first field is for a subsequent candidate cell.

In an embodiment, the first field includes at least an identifier of the second candidate cell.

In an embodiment, the first field only includes the identifier of the second candidate cell.

In an embodiment, the first field includes part of the configuration information of the second candidate cell.

In a sub-embodiment of the foregoing embodiment, the part of the configuration information includes: scpac-ReferenceConfiguration.

In an embodiment, the first field includes a reason why the configuration information of the second candidate cell is applied.

In a sub-embodiment of the foregoing embodiment, the first field includes a plurality of conditional fields, and the first field is set as a first conditional field to indicate the reason why the configuration information of the second candidate cell is applied.

### Embodiment 8

Embodiment 8 illustrates a schematic diagram of a first information block including a second field according to an embodiment of this application, as shown in FIG. 8.

In Embodiment 8, the first information block includes the second field, and the second field indicates s reason why configuration information of a second candidate cell is not applied; and the configuration information of the second candidate cell is not applied.

In an embodiment, that the first information block includes the second field indicates that the configuration information of the second candidate cell is not applied.

In an embodiment, that the first information block does not include the second field indicates that the configuration information of the second candidate cell is applied.

In an embodiment, the first information block does not include a first field, and that the first information block includes the second field indicates that the configuration information of the second candidate cell is not applied.

In an embodiment, the first information block includes the first field, and that the first field includes the second field indicates that the configuration information of the second candidate cell is not applied.

In an embodiment, the first information block includes the first field, and that the first information block does not include the second field indicates that the configuration information of the second candidate cell is applied.

In an embodiment, the second field indicates the reason why the configuration information of the second candidate cell is not applied, which indicates that the configuration information of the second candidate cell is not applied.

In an embodiment, the second field does not indicate the reason why the configuration information of the second candidate cell is not applied, which indicates that the configuration information of the second candidate cell is applied.

In an embodiment, a name of the second field includes subsequent.

In an embodiment, the name of the second field includes subsequentCPAC.

In an embodiment, the name of the second field includes scpac.

In an embodiment, the name of the second field includes subsequentCHO.

In an embodiment, the name of the second field includes subsequentLTM.

In an embodiment, the name of the second field includes cause.

In an embodiment, the name of the second field includes HO-Type.

In an embodiment, the second field is subsequentFailureCause-r19.

In an embodiment, the second field is subsequentFailureCause-r20.

In an embodiment, the second field includes a plurality of candidate fields, and the second field is set as a first candidate field, where the first candidate field indicates the reason why the configuration information of the second candidate cell is not applied.

In an embodiment, the reason why the configuration information of the second candidate cell is not applied includes: a handover to the first candidate cell fails.

In a sub-embodiment of the foregoing embodiment, the second field indicates a type of a handover failure, and in response to the configuration information of the second candidate cell not being applied, the second field is set to indicate that the handover type is a subsequent handover.

In a sub-embodiment of the foregoing embodiment, the second field is lastHO-Type.

In an embodiment, the reason why the configuration information of the second candidate cell is not applied includes: a radio link failure occurs on the first candidate cell.

In a sub-embodiment of the foregoing embodiment, the reason for the radio link failure includes: T310 expiry.

In a sub-embodiment of the foregoing embodiment, the reason for the radio link failure includes: T312 expiry.

In a sub-embodiment of the foregoing embodiment, the reason for the radio link failure includes: an MCG recovery failure, where the first candidate cell belongs to an MCG.

In a sub-embodiment of the foregoing embodiment, the reason for the radio link failure includes: a random access failure.

In a sub-embodiment of the foregoing embodiment, the reason for the radio link failure includes: a synchronization configuration failure.

In a sub-embodiment of the foregoing embodiment, the reason for the radio link failure includes: a beam failure recovery failure.

In a sub-embodiment of the foregoing embodiment, the first information block is an RLF-report.

In a sub-embodiment of the foregoing embodiment, the first information block is not an RLF-report.

In an embodiment, the reason why the configuration information of the second candidate cell is not applied includes: configuration information of the first candidate cell is not successfully applied.

In an embodiment, the reason why the configuration information of the second candidate cell is not applied includes: the configuration information of the first candidate cell is not applied.

In an embodiment, the second field is the first field.

In an embodiment, the second field belongs to the first field.

In an embodiment, the second field does not belong to the first field.

In an embodiment, that the configuration information of the second candidate cell is not applied means: Measurement is not performed on the second candidate cell.

In an embodiment, that the configuration information of the second candidate cell is not applied means: An execution condition for the configuration information of the second candidate cell is not evaluated.

In an embodiment, that the configuration information of the second candidate cell is not applied means: The second candidate cell is not selected as a target cell for a handover.

In an embodiment, that the configuration information of the second candidate cell is not applied means: Random access is not performed on the second candidate cell.

### Embodiment 9

Embodiment 9 illustrates a schematic diagram of a first information block including at least one of a first time interval or a second time interval according to an embodiment of this application, as shown in FIG. 9.

In Embodiment 9, the first information block includes at least one of the first time interval or the second time interval; the first time interval depends on a release of configuration information of a second candidate cell; and the second time interval depends on application of the configuration information of the second candidate cell.

In an embodiment, that the first information block includes at least one of the first time interval or the second time interval means: The first information block includes at least the first time interval.

In an embodiment, that the first information block includes at least one of the first time interval or the second time interval means: The first information block includes at least the second time interval.

In an embodiment, that the first information block includes at least one of the first time interval or the second time interval means: The first information block includes at least the first time interval and the second time interval.

In an embodiment, the release of the configuration information of the second candidate cell includes: The configuration information of the second candidate cell is triggered by a first node for releasing.

In an embodiment, that the configuration information of the second candidate cell is triggered by the first node for releasing includes: When a radio link failure occurs in a first candidate cell, the first node releases the configuration information of the second candidate cell.

In an embodiment, that the configuration information of the second candidate cell is triggered by the first node for releasing includes: When the first candidate cell satisfies a fifth condition, in response to the fifth condition being satisfied, the first node releases the configuration information of the second candidate cell.

In a sub-embodiment of the foregoing embodiment, the fifth condition is for execution of configuration information of a subsequent candidate cell, and the second candidate cell is a subsequent candidate cell.

In a sub-embodiment of the foregoing embodiment, the fifth condition includes: When camping time of the first node in the first candidate cell exceeds a first time threshold, the first node no longer performs evaluation of the subsequent candidate cell.

In a sub-embodiment of the foregoing embodiment, the fifth condition includes: When a measurement result of the first node in the first candidate cell is lower than a first measurement threshold, the first node no longer performs evaluation of the subsequent candidate cell.

In a sub-embodiment of the foregoing embodiment, that the first node no longer performs the evaluation of the subsequent candidate cell means: no longer performing measurement of a conditional configuration condition.

In a sub-embodiment of the foregoing embodiment, that the first node no longer performs the evaluation of the subsequent candidate cells mean: no longer applying the configuration information of the subsequent candidate cell.

In a sub-embodiment of the foregoing embodiment, that the first node no longer performs the evaluation of the subsequent candidate cell means: releasing the configuration information of the subsequent candidate cell stored by the first node.

In an embodiment, that the configuration information of the second candidate cell is triggered by the first node for releasing includes: When the first candidate cell is handed over to a first target cell, and the first target cell is not a subsequent candidate cell, the first node releases the configuration information of the second candidate cell.

In a sub-embodiment of the foregoing embodiment, the first target cell is a candidate cell configured on a first serving cell, and the first target cell is for a handover.

In a sub-embodiment of the foregoing embodiment, when the first target cell is a candidate cell configured for the first serving cell, and cell reselection is performed after a radio link failure occurs in the first candidate cell, the first target cell is a reselected cell.

In a sub-embodiment of the foregoing embodiment, the first target cell is a candidate cell configured on the first candidate cell, and the first target cell is for a handover.

In a sub-embodiment of the foregoing embodiment, the candidate cell means: a CHO candidate cell.

In a sub-embodiment of the foregoing embodiment, the candidate cell means: an LTM candidate cell.

In a sub-embodiment of the foregoing embodiment, the candidate cell means: a C-LTM candidate cell.

In a sub-embodiment of the foregoing embodiment, the candidate cell means: a CPAC candidate cell.

In a sub-embodiment of the foregoing embodiment, the first target cell is a target handover cell configured for the first candidate cell, and the first target cell is indicated by a network.

In an embodiment, the release of the configuration information of the second candidate cell includes: The configuration information of the second candidate cell is indicated by an RRC message for releasing.

In an embodiment, an RRC message is received in the first candidate cell, the RRC message is used to indicate the release of the configuration information of the subsequent candidate cell, and the second candidate cell is a subsequent candidate cell.

In a sub-embodiment of the foregoing embodiment, the RRC message includes a CondReconfigToRemoveList.

In a sub-embodiment of the foregoing embodiment, the RRC message includes a condExecutionCondToReleaseList-r18.

In a sub-embodiment of the foregoing embodiment, the RRC message is set to release.

In an embodiment, an RRC message is received in the first candidate cell, the RRC message is used to indicate that the first node enters a first RRC state, and the first RRC state is not a current RRC state.

In a sub-embodiment of the foregoing embodiment, the RRC message includes an RRCRelease message.

In a sub-embodiment of the foregoing embodiment, the RRC message is an RRCRelease message.

In a sub-embodiment of the foregoing embodiment, the first RRC state is an RRC_IDLE state.

In a sub-embodiment of the foregoing embodiment, the first RRC state is an RRC_INACTIVE state.

In a sub-embodiment of the foregoing embodiment, the first RRC state is an RRC state other than the RRC_IDLE state and the RRC_INACTIVE state.

In an embodiment, an RRC message is received in the first candidate cell, the RRC message indicates to release configuration information of all configured candidate cells.

In an embodiment, a start moment of the first time interval depends on the application of the configuration information of the first candidate cell.

In an embodiment, the start moment of the first time interval is time when configuration information of the first candidate cell is applied.

In an embodiment, that the configuration information of the first candidate cell is applied means: A condition for the configuration information of the first candidate cell being applied is satisfied.

In an embodiment, that the configuration information of the first candidate cell is applied means: starting to apply the configuration information of the first candidate cell.

In an embodiment, that the configuration information of the first candidate cell is applied means: A condition for the configuration information of the second candidate cell being applied is satisfied.

In an embodiment, the time when the configuration information of the first candidate cell is applied means: The configuration information of the first candidate cell is fully applied.

In an embodiment, the start moment of the first time interval depends on the configuration information of the second candidate cell being applied.

In an embodiment, the start moment of the first time interval is time when the configuration information of the second candidate cell is applied.

In an embodiment, the start moment of the first time interval is time when the configuration information of the second candidate cell is received.

In an embodiment, the start moment of the first time interval is time when the condition for the configuration information of the second candidate cell being applied starts to be evaluated.

In an embodiment, the start moment of the first time interval depends on the configuration message of the subsequent candidate cell being applied.

In an embodiment, the start moment of the first time interval is time when the subsequent candidate cell starts to perform evaluation.

In an embodiment, the start moment of the first time interval is time when the RRC message is received.

In an embodiment, an end moment of the first time interval depends on time when the configuration information of the second candidate cell is released.

In an embodiment, that the configuration information is released means: The configuration information is indicated to be released.

In an embodiment, that the configuration information is released means: The configuration information starts to perform releasing.

In an embodiment, that the configuration information is released means: The configuration information is fully released.

In an embodiment, the end moment of the first time interval is time when the configuration information of the second candidate cell is triggered by the first node for releasing.

In an embodiment, the end moment of the first time interval is time when the RRC message is received.

In an embodiment, the time when the RRC message is received means: time when the RRC message is received at a physical layer.

In an embodiment, the time when the RRC message is received means: time when the RRC message is received at the physical layer and delivered to a higher layer.

In an embodiment, the first time interval is time between the configuration information of the first candidate cell being applied and the configuration information of the second candidate cell being released.

In an embodiment, the first time interval is time between the configuration information of the first candidate cell being applied and the RRC message being received.

In an embodiment, a start moment of the second time interval depends on the configuration information of the first candidate cell being applied.

In an embodiment, the start moment of the second time interval is time when the configuration information of the first candidate cell is applied.

In an embodiment, the start moment of the second time interval is time when the configuration information of the first candidate cell is fully applied.

In an embodiment, the start moment of the second time interval depends on evaluation of a condition for the configuration information of the second candidate cell being applied.

In an embodiment, the start moment of the second time interval is time when the condition for the configuration information of the second candidate cell being applied starts to be evaluated.

In an embodiment, an end moment of the second time interval depends on the configuration information of the second candidate cell being applied.

In an embodiment, the end moment of the second time interval is time when the configuration information of the second candidate cell is applied.

In an embodiment, that the configuration information of the second candidate cell is applied means: The configuration information of the second candidate cell is triggered for application.

In an embodiment, that the configuration information of the second candidate cell is applied means: The configuration information of the second candidate cell is fully applied.

In an embodiment, that the configuration information of the second candidate cell is applied means: The configuration information of the second candidate cell is not fully applied.

In an embodiment, that the configuration information of the second candidate cell is applied means: The condition for the configuration information of the second candidate cell being applied is satisfied.

In an embodiment, the second time interval is time from when the configuration information of the first candidate cell is fully applied to when the configuration information of the second candidate cell is applied.

In an embodiment, the second time interval is time from when the condition for the configuration information of the second candidate cell being applied starts to be evaluated to when the configuration information of the second candidate cell is applied.

In an embodiment, the first candidate cell is a PCell, the second candidate cell is a PCell, and the second candidate cell is a subsequent candidate cell of the first candidate cell.

In an embodiment, the first candidate cell is a PSCell, the second candidate cell is a PSCell, and the second candidate cell is a subsequent candidate cell of the first candidate cell.

In an embodiment, the first candidate cell is a PCell, the second candidate cell is a PSCell, the second candidate cell is a subsequent candidate cell of the first candidate cell, and the configuration information of the second candidate cell is for subsequent CPA.

### Embodiment 10

Embodiment 10 illustrates a schematic diagram of a first information block including a third information block according to an embodiment of this application, as shown in FIG. 10.

In Embodiment 10, the first information block includes the third information block, and the third information block indicates whether configuration information of a second candidate cell is fully applied; and after configuration information of a first candidate cell is fully applied, the configuration information of the second candidate cell is applied.

In an embodiment, that the first information block includes the third information block depends on "after the configuration information of the first candidate cell is fully applied".

In an embodiment, after the configuration information of the first candidate cell is fully applied, the first information block includes the third information block.

In an embodiment, that the first information block includes the third information block depends on that the configuration information of the second candidate cell is applied.

In an embodiment, when the configuration information of the second candidate cell is applied, the first information block includes the third information block.

In an embodiment, when at least the configuration information of the second candidate cell is applied, the first information block includes the third information block.

In an embodiment, that the first information block includes the third information block indicates that the configuration information of the second candidate cell is fully applied.

In an embodiment, the first information block includes the third information block, and that the third information block is set indicates that the configuration information of the second candidate cell is fully applied.

In an embodiment, that the first information block does not include the third information block indicates that the configuration information of the second candidate cell is not fully applied.

In an embodiment, the first information block includes the third information block, and that the third information block is set indicates that the configuration information of the second candidate cell is not fully applied.

In an embodiment, the first information block includes the third information block, and that the third information block is not set indicates that the configuration information of the second candidate cell is not fully applied.

In an embodiment, that the configuration information of the second candidate cell is fully applied means: A handover performed to the second candidate cell is completed.

In an embodiment, that the configuration information of the second candidate cell is fully applied means: connecting to the second candidate cell.

In an embodiment, that the configuration information of the second candidate cell is fully applied means: The second candidate cell is used as a current serving cell.

In an embodiment, the third information block includes a cell identifier of the at least second candidate cell.

In an embodiment, the third information block includes first measurement information.

In an embodiment, the third information block includes partial information of the first measurement information.

In an embodiment, the third information block includes at least one of a first time interval or a second time interval.

In an embodiment, the third information block includes a reason why the configuration information of the second candidate cell is fully applied.

In an embodiment, the third information block includes a reason why the configuration information of the second candidate cell is not fully applied.

In an embodiment, the third information block is used for configuration information of a subsequent candidate cell being applied, and the second candidate cell is a subsequent candidate cell.

In an embodiment, that the configuration information of the second candidate cell is applied depends on that the configuration information of the first candidate cell is applied.

In an embodiment, that the configuration information of the second candidate cell is applied depends on that the configuration information of the first candidate cell is fully applied.

In an embodiment, that the configuration information of the second candidate cell is fully applied depends on that the configuration information of the first candidate cell is fully applied.

### Embodiment 11

Embodiment 11 illustrates a flowchart of setting a fourth information block in a second UE variable according to an embodiment of this application, as shown in FIG. 11.

In Embodiment 11, in response to configuration information of a second candidate cell not being fully applied, the fourth information block is set in the second UE variable, and the fourth information block indicates that the configuration information of the second candidate cell is not fully applied.

In an embodiment, the second UE variable is different from a first UE variable.

In an embodiment, that the fourth information block is set in the second UE variable indicates that the configuration information of the second candidate cell is not fully applied.

In an embodiment, content set in the fourth information block in the second UE variable indicates that the configuration information of the second candidate cell is not fully applied.

In an embodiment, that the fourth information block is set in the second UE variable depends on the configuration information of the second candidate cell not being fully applied.

In an embodiment, when the configuration information of the second candidate cell is not fully applied, the fourth information block is set in the second UE variable.

In an embodiment, when at least the configuration information of the second candidate cell is not fully applied, the fourth information block is set in the second UE variable.

In an embodiment, the second UE variable includes an identifier of a first candidate cell.

In an embodiment, the second UE variable is VarRLF-report.

In an embodiment, the second UE variable is Varsubsequent-report.

In an embodiment, the second UE variable is for storing subsequent candidate configuration information.

In an embodiment, the fourth information block is for that the subsequent candidate configuration information is not fully applied.

In an embodiment, the fourth information block includes a reason why the configuration information of the second candidate cell is not fully applied.

In an embodiment, that the configuration information of the second candidate cell is not fully applied means: A handover performed to the second candidate cell is not completed.

In an embodiment, that the configuration information of the second candidate cell is not fully applied means: A connection to the second candidate cell fails.

In an embodiment, the reason why the configuration information of the second candidate cell is not fully applied includes: an HOF occurs during a handover to the second candidate cell.

In an embodiment, the reason why the configuration information of the second candidate cell is not fully applied includes: an RLF occurs before a handover to the second candidate cell.

In an embodiment, the reason why the configuration information of the second candidate cell is not fully applied includes: LTM fails.

In an embodiment, the reason why the configuration information of the second candidate cell is not fully applied includes: Continuous LTM fails.

In an embodiment, the reason why the configuration information of the second candidate cell is not fully applied includes: Continuous CHO fails.

In an embodiment, the reason why the configuration information of the second candidate cell is not fully applied includes: Continuous CPC fails.

In an embodiment, the reason why the configuration information of the second candidate cell is not fully applied includes: When the configuration information of the second candidate cell is applied, a network indicates a first node to stop the application of the configuration information of the second candidate cell.

In an embodiment, the fourth information block includes a cell identifier of the at least second candidate cell.

In an embodiment, the fourth information block includes first measurement information.

In an embodiment, the fourth information block includes partial information of the first measurement information.

In an embodiment, the fourth information block includes at least one of a first time interval and a second time interval.

In an embodiment, the fourth information block is unrelated to a third information block.

### Embodiment 12

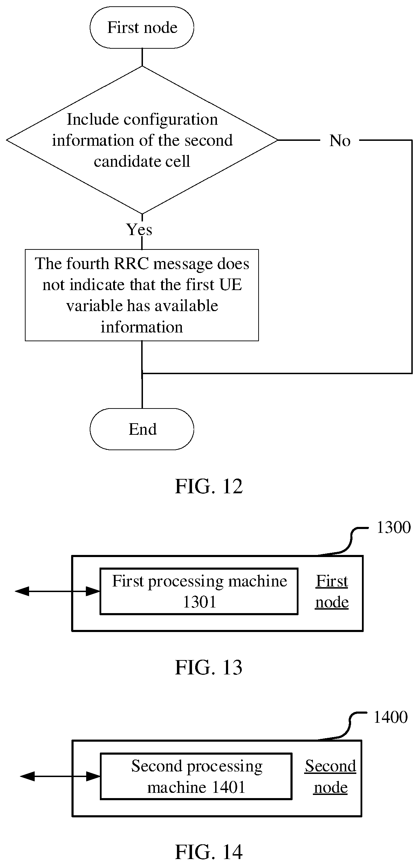

Embodiment 12 illustrates a schematic diagram of a fourth RRC message not indicating that a first UE variable has available information according to an embodiment of this application, as shown in FIG. 12.

In Embodiment 12, in response to configuration information of a first candidate cell being successfully applied, the fourth RRC message is sent. A second RRC message indicates that RRC reconfiguration is completed, the fourth RRC message does not indicate that the first UE variable has available information, and the fourth RRC message not indicating that the first UE variable has the available information depends on a second candidate cell.

In an embodiment, when the configuration information of the first cell is successfully applied, the fourth RRC message is sent.

In an embodiment, when at least the configuration information of the first cell is successfully applied, the fourth RRC message is sent.

In an embodiment, once the configuration information of the first cell is successfully applied, the fourth RRC message is sent.

In an embodiment, the fourth RRC message is set to indicate that the RRC reconfiguration is completed.

In an embodiment, the fourth RRC message is delivered to a lower layer to indicate that the RRC reconfiguration is completed.

In an embodiment, that the fourth RRC message is sent indicates that the RRC reconfiguration is completed.

In an embodiment, that the RRC reconfiguration is completed means: An RRC reconfiguration command is successfully received.

In an embodiment, that the RRC reconfiguration is completed means: The RRC reconfiguration command is successfully delivered to an RRC layer.

In an embodiment, that the RRC reconfiguration is completed means: The RRC reconfiguration command is successfully applied.

In an embodiment, the fourth RRC message is an RRCReconfigurationComplete message.

In an embodiment, the fourth RRC message includes an RRCReconfigurationComplete message.

In an embodiment, the fourth RRC message is not an RRCReconfigurationComplete message.

In an embodiment, that the fourth RRC message does not indicate that the first UE variable has the available information means: Before the fourth RRC message is sent, there is no available information block in the first UE variable, and the fourth RRC message does not indicate that the first UE variable has the available information.

In an embodiment, that the fourth RRC message does not indicate that the first UE variable has the available information means: Before the fourth RRC message is sent, an available information block is stored in the first UE variable, and the fourth RRC message does not indicate that the first UE variable has the available information.

In an embodiment, that the fourth RRC message does not indicate that the first UE variable has the available information means: Before the fourth RRC message is sent, in response to the configuration information of the first candidate cell being successfully applied, a first information block is set in the first UE variable, and the fourth RRC message does not indicate that the first UE variable has the available information.

In an embodiment, that the fourth RRC message does not indicate that the first UE variable has the available information means: A field, in the fourth RRC message, indicating that the first UE variable has the available information is not set.

In an embodiment, that the fourth RRC message does not indicate that the first UE variable has the available information means: A field, in the fourth RRC message, indicating that the first UE variable has the available information does not exist.

In an embodiment, the configuration information of the first candidate cell indicates that the fourth RRC message does not indicate that the first UE variable has the available information.

In an embodiment, that the fourth RRC message not indicating that the first UE variable has the available information depends on the second candidate cell means: When the configuration information of the first candidate cell includes configuration information of the second candidate cell, the fourth RRC message does not indicate that the first UE variable has the available information.

In an embodiment, that the fourth RRC message not indicating that the first UE variable has the available information depends on the second candidate cell means: When at least the configuration information of the first cell includes the configuration information of the second candidate cell, the fourth RRC message does not indicate that the first UE variable has the available information.

In an embodiment, that the fourth RRC message not indicating that the first UE variable has the available information depends on the second candidate cell means: When the configuration information of the first candidate cell includes the configuration information of the second candidate cell and the second candidate cell is configured for the first candidate cell, the fourth RRC message does not indicate that the first UE variable has the available information.

In an embodiment, that the fourth RRC message not indicating that the first UE variable has the available information depends on the second candidate cell means: When at least the configuration information of the first cell includes the configuration information of the second candidate cell and the second candidate cell is configured for the first candidate cell, the fourth RRC message does not indicate that the first UE variable has the available information.

In an embodiment, that the fourth RRC message not indicating that the first UE variable has the available information depends on the second candidate cell means: When a first node U01 includes the configuration information of the second candidate cell, the fourth RRC message does not indicate that the first UE variable has the available information; and the second candidate cell is a subsequent candidate cell of the first candidate cell.

In an embodiment, that the fourth RRC message not indicating that the first UE variable has the available information depends on the second candidate cell means: When at least the first node U01 includes the configuration information of the second candidate cell, the fourth RRC message does not indicate that the first UE variable has the available information.

In an embodiment, that the fourth RRC message not indicating that the first UE variable has the available information depends on the second candidate cell means: In response to the configuration information of the first candidate cell being successfully applied, the configuration information of the second candidate cell starts to be applied; and in response to the configuration information of the second candidate cell being applied, the fourth RRC message does not indicate that the first UE variable has the available information.

In an embodiment, that the fourth RRC message not indicating that the first UE variable has the available information depends on the second candidate cell means: In response to the configuration information of the first candidate cell being successfully applied, the first information block is not set in the first UE variable, and the fourth RRC message does not indicate that the first UE variable has the available information.

In an embodiment, that the first information block is not set in the first UE variable depends on the configuration information of the first candidate cell including the configuration information of the second candidate cell.

In an embodiment, that the fourth RRC message not indicating that the first UE variable has the available information depends on the configuration information of the first candidate cell being successfully applied.

### Embodiment 13

Embodiment 13 illustrates a block diagram of a structure of a processing apparatus used for a first node according to an embodiment of this application, as shown in FIG. 13. In FIG. 13, the processing apparatus 1300 in the first node includes a first processing machine 1301.

The first processing machine 1301 receives a first RRC message. The first RRC message includes configuration information of a first candidate cell, and the first candidate cell is configured for a first serving cell; and in response to at least the configuration information of the first candidate cell being applied, a first information block is set in a first UE variable.

In Embodiment 13, the configuration information of the first candidate cell includes a second information block, the second information block includes configuration information of a second candidate cell, and the second candidate cell is configured for the first candidate cell.

In an embodiment, the first information block includes at least an identifier of the first serving cell, an identifier of the first candidate cell, and an identifier of the second candidate cell.

In an embodiment, the first information block includes first measurement information, the first measurement information depends on measurement performed on at least the second candidate cell based on the second information block, and the second candidate cell is a subsequent candidate cell.

In an embodiment, the first information block includes a first field, and the first field indicates whether the configuration information of the second candidate cell is applied.

In an embodiment, the first information block includes a second field, and the second field indicates a reason why the configuration information of the second candidate cell is not applied; and the configuration information of the second candidate cell is not applied.

In an embodiment, the first information block includes at least one of a first time interval or a second time interval; the first time interval depends on a release of the configuration information of the second candidate cell; and the second time interval depends on application of the configuration information of the second candidate cell.

In an embodiment, the first information block includes a third information block, and the third information block indicates whether the configuration information of the second candidate cell is fully applied; and after the configuration information of the first candidate cell is fully applied, the configuration information of the second candidate cell is applied.

In an embodiment, the first processing machine 1301, in response to the configuration information of the second candidate cell not being fully applied, sets a fourth information block in a second UE variable. The fourth information block indicates that the configuration information of the second candidate cell is not fully applied.

In an embodiment, the second UE variable is different from the first UE variable.

In an embodiment, the first processing machine 1301 receives a second RRC message, where the second RRC message includes a first request indication; and in response to the second RRC message being received, sends a third RRC message.

In an embodiment, the third RRC message includes the first information block in the first UE variable; and that the third RRC message includes the first information block in the first UE variable depends on the first request indication.

In an embodiment, the first processing machine 1301 includes a first receiver.

In an embodiment, the first processing machine 1301 includes a first transmitter.

In an embodiment, the first processing machine 1301 includes a first receiver and a first transmitter.

In an embodiment, the first receiver includes at least one of the antenna 452, the receiver 454, the multi-antenna receive processor 458, the receive processor 456, the controller/processor 459, the memory 460, or the data source 467 in FIG. 4 of this application.

In an embodiment, the first receiver includes at least the antenna 452 and the receiver 454 in FIG. 4 of this application.

In an embodiment, the first transmitter includes at least one of the antenna 452, the transmitter 454, the multi-antenna transmit processor 457, the transmit processor 468, the controller/processor 459, the memory 460, or the data source 467 in FIG. 4 of this application.

In an embodiment, the first transmitter includes at least the antenna 452 and the transmitter 454 in FIG. 4 of this application.

In an embodiment, the first information block in the first UE variable is set by the first receiver.

In an embodiment, the first information block in the first UE variable is set by the first transmitter.

In an embodiment, the first information block in the first UE variable is set by the memory 460 in the first receiver.

In an embodiment, the first information block in the first UE variable is set by the memory 460 in the first transmitter.

In an embodiment, the first information block in the first UE variable is set by the controller/processor 459 in the first receiver.

In an embodiment, the first information block in the first UE variable is set by the controller/processor 459 in the first transmitter.

In an embodiment, the fourth information block in the second UE variable is set by the first receiver.

In an embodiment, the fourth information block in the second UE variable is set by the first transmitter.

In an embodiment, the fourth information block in the second UE variable is set by the memory 460 in the first receiver.

In an embodiment, the fourth information block in the second UE variable is set by the memory 460 in the first transmitter.

In an embodiment, the fourth information block in the second UE variable is set by the controller/processor 459 in the first receiver.

In an embodiment, the fourth information block in the second UE variable is set by the controller/processor 459 in the first transmitter.

### Embodiment 14

Embodiment 14 illustrates a block diagram of a structure of a processing apparatus used for a second node according to an embodiment of this application, as shown in FIG. 14. In FIG. 14, the processing apparatus 1400 in the second node includes a second processing machine 1401.

The second processing machine 1401 sends a first RRC message, where the first RRC message includes configuration information of a first candidate cell, and the first candidate cell is configured for a first serving cell.

In Embodiment 14, in response to at least the configuration information of the first candidate cell being applied, a recipient of the first RRC message sets a first information block in a first UE variable.

In an embodiment, the configuration information of the first candidate cell includes a second information block, the second information block includes configuration information of a second candidate cell, and the second candidate cell is configured for the first candidate cell.

In an embodiment, the first information block includes at least an identifier of the first serving cell, an identifier of the first candidate cell, and an identifier of the second candidate cell.

In an embodiment, the first information block includes first measurement information, the first measurement information depends on measurement performed by the recipient of the first RRC message on at least the second candidate cell based on the second information block, and the second candidate cell is a subsequent candidate cell.

In an embodiment, the first information block includes a first field, and the first field indicates whether the configuration information of the second candidate cell is applied.

In an embodiment, the first information block includes a second field, and the second field indicates a reason why the configuration information of the second candidate cell is not applied; and the configuration information of the second candidate cell is not applied.

In an embodiment, the first information block includes at least one of a first time interval or a second time interval; the first time interval depends on a release of the configuration information of the second candidate cell; and the second time interval depends on application of the configuration information of the second candidate cell.

In an embodiment, the first information block includes a third information block, and the third information block indicates whether the configuration information of the second candidate cell is fully applied; and after the configuration information of the first candidate cell is fully applied, the configuration information of the second candidate cell is applied.

In an embodiment, in response to the configuration information of the second candidate cell not being fully applied, the recipient of the first RRC message sets a fourth information block in a second UE variable, where the fourth information block indicates that the configuration information of the second candidate cell is not fully applied.

In an embodiment, the second UE variable is different from the first UE variable.

In an embodiment, the second processing machine 1401 sends a second RRC message, where the second RRC message includes a first request indication; and in response to the second RRC message being sent, receives a third RRC message.

In an embodiment, the third RRC message includes the first information block in the first UE variable.

In an embodiment, that the third RRC message includes the first information block in the first UE variable depends on the first request indication.

In an embodiment, the second processing machine 1401 includes a second receiver.

In an embodiment, the second processing machine 1401 includes a second transmitter.

In an embodiment, the second processing machine 1401 includes a second receiver and a second transmitter.

In an embodiment, the second transmitter includes at least one of the antenna 420, the transmitter 418, the multi-antenna transmit processor 471, the transmit processor 416, the controller/processor 475, or the memory 476 in FIG. 4 of this application.

In an embodiment, the second transmitter includes at least the antenna 420 and the transmitter 418 in FIG. 4 of this application.

In an embodiment, the second receiver includes at least one of the antenna 420, the receiver 418, the multi-antenna receive processor 472, the receive processor 470, the controller/processor 475, or the memory 476 in FIG. 4 of this application.

In an embodiment, the second receiver includes at least the antenna 420 and the receiver 418 in FIG. 4 of this application.

A person of ordinary skill in the art may understand that all or part of the steps of the foregoing methods may be implemented by a program instructing relevant hardware. The program may be stored in a computer-readable storage medium, such as a read-only memory, a hard disk, or an optical disk. Optionally, all or part of the steps of the foregoing embodiments may also be implemented using one or more integrated circuits. Correspondingly, each module unit in the foregoing embodiments may be implemented in a form of hardware, or may be implemented in a form of a software functional module. This application is not limited to any specific combination of software and hardware. The user equipment, the terminal, and the UE in this application include, but are not limited to, drones, communication modules on drones, remote control aircrafts, flying machines, small aircrafts, mobile phones, tablet computers, notebook computers, vehicle-mounted communication devices, wireless sensors, network cards, internet of things terminals, RFID terminals, NB-IOT terminals, MTC (Machine Type Communication, machine type communication) terminals, eMTC (enhanced MTC, enhanced MTC) terminals, data cards, network cards, vehicle-mounted communication devices, low-cost mobile phones, low-cost tablet computers, and other wireless communication devices. The base station or system device in this application includes, but is not limited to, a macro cellular base station, a micro cellular base station, a home base station, a relay base station, a gNB (NR NodeB) NR NodeB, a TRP (Transmitter Receiver Point, transmission reception point), and another wireless communication device.

The foregoing descriptions are merely preferred embodiments of this application, but are not intended to limit the protection scope of this application. Any modification, equivalent replacement, improvement, and the like made within the spirit and principles of this application shall all fall within the protection scope of this application.

## Claims

1. A first node used for wireless communication, comprising:
a first processing machine, configured to: receive a first RRC message, wherein the first RRC message comprises configuration information of a first candidate cell, and the first candidate cell is configured for a first serving cell; and in response to at least the configuration information of the first candidate cell being applied, set a first information block in a first UE variable, wherein
the configuration information of the first candidate cell comprises a second information block, the second information block comprises configuration information of a second candidate cell, and the second candidate cell is configured for the first candidate cell; and the first information block comprises at least an identifier of the first serving cell, an identifier of the first candidate cell, and an identifier of the second candidate cell.

2. The first node according to claim 1, wherein the first information block comprises first measurement information, the first measurement information depends on measurement performed on at least the second candidate cell based on the second information block, and the second candidate cell is a subsequent candidate cell.

3. The first node according to claim 1 or 2, wherein the first information block comprises a first field, and the first field indicates whether the configuration information of the second candidate cell is applied.

4. The first node according to any one of claims 1 to 3, wherein the first information block comprises a second field, and the second field indicates a reason why the configuration information of the second candidate cell is not applied; and the configuration information of the second candidate cell is not applied.

5. The first node according to any one of claims 1 to 4, wherein the first information block comprises at least one of a first time interval or a second time interval; the first time interval depends on a release of the configuration information of the second candidate cell; and the second time interval depends on application of the configuration information of the second candidate cell.

6. The first node according to any one of claims 1 to 5, wherein the first information block comprises a third information block, and the third information block indicates whether the configuration information of the second candidate cell is fully applied; and after the configuration information of the first candidate cell is fully applied, the configuration information of the second candidate cell is applied.

7. The first node according to any one of claims 1 to 6, comprising:
the first processing machine, configured to: in response to the configuration information of the second candidate cell not being fully applied, set a fourth information block in a second UE variable, wherein the fourth information block indicates that the configuration information of the second candidate cell is not fully applied; and
the second UE variable is different from the first UE variable.

8. The first node according to any one of claims 1 to 7, comprising:
the first processing machine, configured to: in response to the second RRC message being sent, receive a third RRC message, wherein the third RRC message comprises a first request indication; and in response to the third RRC message being received, send a fourth RRC message, wherein
the fourth RRC message comprises at least part of the first information block; and the fourth RRC message comprises that the at least part of the first information block depends on the first request indication.

9. The first node according to any one of claims 1 to 8, comprising:
the first processing machine, configured to: in response to the configuration information of the first candidate cell being successfully applied, send the fourth RRC message, wherein the fourth RRC message indicates that RRC reconfiguration is completed; and
the fourth RRC message does not indicate that the first UE variable has available information; and the fourth RRC message does not indicate that the first UE variable has the available information depending on the second candidate cell.

10. A second node used for wireless communication, comprising:
a second processing machine, configured to: send a first RRC message, wherein the first RRC message comprises configuration information of a first candidate cell, and the first candidate cell is configured for a first serving cell; and
in response to at least the configuration information of the first candidate cell being applied, a recipient of the first RRC message sets a first information block in a first UE variable; the configuration information of the first candidate cell comprises a second information block, the second information block comprises configuration information of a second candidate cell, and the second candidate cell is configured for the first candidate cell; and the first information block comprises at least an identifier of the first serving cell, an identifier of the first candidate cell, and an identifier of the second candidate cell.

11. A method in a first node used for wireless communication, comprising:
receiving a first RRC message, wherein the first RRC message comprises configuration information of a first candidate cell, and the first candidate cell is configured for a first serving cell; and in response to at least the configuration information of the first candidate cell being applied, setting a first information block in a first UE variable, wherein
the configuration information of the first candidate cell comprises a second information block, the second information block comprises configuration information of a second candidate cell, and the second candidate cell is configured for the first candidate cell; and the first information block comprises at least an identifier of the first serving cell, an identifier of the first candidate cell, and an identifier of the second candidate cell.

12. A method in a second node used for wireless communication, comprising:
sending a first RRC message, wherein the first RRC message comprises configuration information of a first candidate cell, and the first candidate cell is configured for a first serving cell; and
in response to at least the configuration information of the first candidate cell being applied, a recipient of the first RRC message sets a first information block in a first UE variable; the configuration information of the first candidate cell comprises a second information block, the second information block comprises configuration information of a second candidate cell, and the second candidate cell is configured for the first candidate cell; and the first information block comprises at least an identifier of the first serving cell, an identifier of the first candidate cell, and an identifier of the second candidate cell.
